# EUROPEAN PATENT APPLICATION

(11) **EP 4 776 468 A2**
(43) Date of publication of application: **15.07.2026**
(21) Application number: 26155241.8
(22) Date of filing: 10.03.2023
(51) Int. Cl.: H02J 7/00

(54) **CHARGING APPARATUS, ELECTRONIC DEVICE, COMMUNICATION METHOD, AND CHARGING SYSTEM**

(30) Priority: 15.03.2022 CN 202210253929; 30.05.2022 CN 202210600786
(62) Divisional of application: 23769668.7
(71) Applicant: Huawei Technologies Co., Ltd., Shenzhen, Guangdong 518129 (CN)
(72) Inventor: YE, Gang, Shenzhen, 518129 (CN); HOU, Qinghui, Shenzhen, 518129 (CN)
(74) Representative: Roth, Sebastian

(57) **Abstract**

A charging apparatus, an electronic device, a communication method, and a charging system are provided. A charging apparatus (10) includes a first DC/DC circuit (102), a first charging circuit (104), a first battery (103), and a first charging terminal (111). The first DC/DC circuit (102) charges the first battery (103) by using an input direct current, and outputs a direct current to an input terminal of the first charging circuit (104). The first charging circuit (104) is configured to: receive a first modulation signal sent by an electronic device (20), and send a first modulation acknowledgement signal to the electronic device (20), where the first modulation signal includes a first current, and the first current identifies that the electronic device (20) initiates communication with the charging apparatus (10). The first charging circuit (104) is alternatively configured to: send a second modulation signal to an electronic device (20), and receive a second modulation acknowledgement signal sent by the electronic device (20), where the second modulation signal includes a first voltage, and the first voltage is used to disconnect a second charging circuit (202) of the electronic device (20) from a second battery (203). Therefore, bidirectional communication between the charging apparatus (10) and the electronic device (20) can be implemented.

## Description

This application claims priority to Chinese Patent Application No. 202210253929.X, filed with the China National Intellectual Property Administration on March 15, 2022 and entitled "CHARGING APPARATUS, ELECTRONIC DEVICE, COMMUNICATION METHOD, AND CHARGING SYSTEM", which is incorporated herein by reference in its entirety.

This application claims priority to Chinese Patent Application No. 202210600786.5, filed with the China National Intellectual Property Administration on May 30, 2022 and entitled "CHARGING APPARATUS, ELECTRONIC DEVICE, COMMUNICATION METHOD, AND CHARGING SYSTEM", which is incorporated herein by reference in its entirety.

### TECHNICAL FIELD

This application relates to the field of terminal device technologies, and in particular, to a charging apparatus, an electronic device, a communication method, and a charging system.

### BACKGROUND

Currently, a metal terminal is disposed on an electronic device like true wireless stereo (True Wireless Stereo, TWS) earphones, a smart watch, or a smart band. After the metal terminal is connected to a corresponding metal terminal on a charging apparatus, the electronic device can communicate with the charging apparatus, and the charging apparatus can charge the electronic device. The charging apparatus may be a charging case or a charging base. The following provides descriptions by using TWS earphones and an earphone charging case as an example.

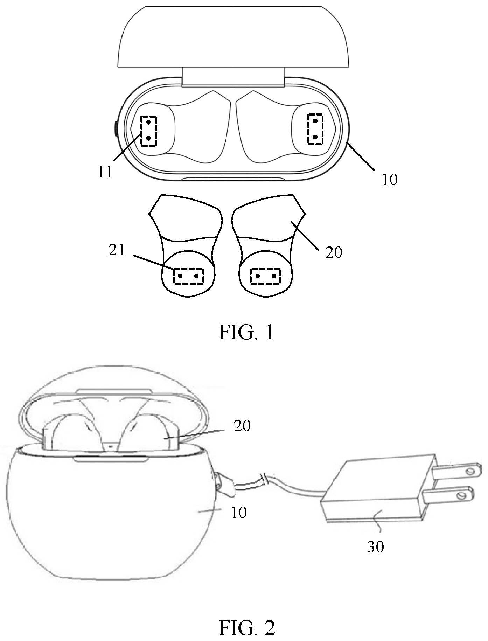

FIG. 1 is a diagram 1 of TWS earphones and a charging case.

A charging apparatus 10 is a charging case, and an externally exposed first group of terminals 11 are disposed on the charging case. Electronic devices 20 are TWS earphones, and an externally exposed second group of terminals 21 are disposed on the TWS earphones. When the TWS earphones are placed in the charging case, the second group of terminals 21 are in contact with the first group of terminals 11, so that the TWS earphones are connected to the charging case. Both the first group of terminals 11 and the second group of terminals 21 are metal terminals.

The externally exposed metal terminals affect waterproof performance of the charging case and the electronic devices, and may be corroded or damaged. Therefore, the metal terminals integrate a charging function and a communication function, so that a quantity of externally exposed metal contacts is reduced as much as possible. In a current solution, switching switches are disposed in the charging case and the electronic devices. When communicating with the electronic devices, the charging case switches a switching switch to a communication channel. After the charging case completes the communication, the charging case switches the switching switch back to a charging channel. However, with development of fast charging technologies, an electronic device may support a direct charging mode and/or a voltage doubling charging mode, and a communication mode between the electronic device and the charging apparatus also needs to support the direct charging mode and/or the voltage doubling charging mode. Therefore, bidirectional communication between the electronic device and the charging case needs to be implemented. However, in the foregoing solution, only the charging case can initiate communication, and the charging case controls an action of the switching switch, and the electronic device cannot initiate communication. In other words, bidirectional communication between the electronic device and the charging case is not supported.

### SUMMARY

According to a first aspect, this application provides a charging apparatus. The charging apparatus is configured to charge an electronic device, and the charging apparatus includes a first DC/DC circuit, a first charging circuit, a first battery, and a charging terminal. An input terminal of the first DC/DC circuit inputs a direct current, and an output terminal of the first DC/DC circuit outputs a direct current to charge the first battery and outputs a direct current to an input terminal of the first charging circuit. An output terminal of the first charging circuit is connected to the charging terminal. The first charging circuit is configured to: receive a first modulation signal sent by the electronic device, demodulate the first modulation signal, and when a demodulation result includes a first current, send a first modulation acknowledgement signal to the electronic device, where the first modulation signal includes the first current, and the first current is used to identify that the electronic device initiates communication with the charging apparatus; or send a second modulation signal to the electronic device, receive a second modulation acknowledgement signal sent by the electronic device, and demodulate the second modulation acknowledgement signal, where the second modulation signal includes a first voltage, and the first voltage is used to disconnect a second charging circuit of the electronic device from a second battery.

According to the solution provided in this application, when the charging apparatus performs direct charging or voltage doubling charging on the electronic device, bidirectional communication between the charging apparatus and the electronic device can be implemented. In other words, the communication may be initiated by the charging apparatus. In this case, the charging apparatus sends the second modulation signal to the electronic device, and the second modulation signal carries the first voltage and communication content. Alternatively, the communication may be initiated by the electronic device. In this case, the electronic device sends the first modulation signal to the charging apparatus, and the first modulation signal carries the first current and the communication content. The foregoing communication process is simple and practical. In this communication manner, specific communication content is modulated in a modulation signal transmitted between the electronic device and the charging apparatus, so that functions such as mutual identity authentication and in-position detection between the electronic device and the charging apparatus can be implemented, and no other detection sensor needs to be additionally disposed. Therefore, hardware costs are further reduced.

In a possible implementation, the first modulation signal and the second modulation acknowledgement signal are current modulation signals, and the first modulation acknowledgement signal and the second modulation signal are voltage modulation signals.

In a possible implementation, the first voltage is less than a first trigger voltage of a first protection circuit of the electronic device. The first protection circuit is configured to control the second charging circuit to be disconnected from the second battery when a charging voltage output by the second charging circuit to the second battery is less than the first trigger voltage.

In a possible implementation, the first voltage is greater than or equal to a second trigger voltage of a second protection circuit of the electronic device. The second protection circuit is configured to: when a charging voltage output by the second charging circuit to the second battery is greater than or equal to the second trigger voltage, control the second charging circuit to be disconnected from the second battery.

In a possible implementation, the first charging circuit specifically includes a first state machine and a first modem circuit. The first modem circuit is connected to the first state machine. The first modem circuit is configured to demodulate the obtained modulation signal, and send a demodulation result to the first state machine. The first state machine is configured to: when it is determined, based on a demodulation result corresponding to the first modulation signal, that the electronic device is connected, control the first modem circuit to modulate an output voltage of the first charging circuit, to form the first modulation acknowledgement signal.

In a possible implementation, the first modem circuit is specifically configured to modulate the output voltage of the first charging circuit, so that the first voltage is zero.

In a possible implementation, the demodulation result further includes a first feature character string. In this case, the first charging circuit is specifically configured to: when the first feature character string is a first preset feature character string, determine that an in-position identification result of the electronic device is in-position, and send, to the electronic device, the first modulation acknowledgement signal that carries the in-position identification result, where a demodulation result of the first modulation acknowledgement signal includes a second feature character string. After receiving the first modulation acknowledgement signal, the electronic device demodulates the first modulation acknowledgement signal, and the demodulation result includes the second feature character string. In this case, the electronic device may determine that an in-position identification of the charging apparatus succeeds.

In a possible implementation, the first state machine performs identity identification on the electronic device based on the demodulation result corresponding to the first modulation signal; and when an identity identification result is that the electronic device matches the charging apparatus, controls the first modem circuit to modulate the output voltage of the first charging circuit, to form the first modulation acknowledgement signal; or when demodulation of the first modem circuit fails, or an identity identification result is that the electronic device does not match the charging apparatus, controls the first modem circuit to stop modulating the output voltage of the first charging circuit.

In a possible implementation, the first state machine is further configured to: when communication with the electronic device needs to be initiated, control the first modem circuit to modulate the output voltage of the first charging circuit, to form the second modulation signal.

In a possible implementation, the charging apparatus further includes a first controller. A first communication interface of the first controller is connected to the first state machine. The first state machine is further configured to: if it is determined that the electronic device is in position, send a first interrupt signal to the first communication interface of the first controller, where the first interrupt signal indicates that the electronic device is in position.

In a possible implementation, the charging apparatus further includes a first comparator. The first comparator is configured to compare an output current of the charging apparatus with a preset current, and send an obtained first comparison result to the first state machine. The first state machine is further configured to send a second interrupt signal to the first controller when it is determined, based on the first comparison result, that the output current of the charging apparatus is less than the preset current, where the second interrupt signal indicates to the first controller that the electronic device is disconnected from the charging apparatus.

In a possible implementation, the first charging circuit further includes a second DC/DC circuit and a first switch module. An input terminal of the second DC/DC circuit is the input terminal of the first charging circuit. An output terminal of the second DC/DC circuit is connected to a first terminal of the first switch module, a second terminal of the first switch module is connected to a second communication interface of the first controller, and a third terminal of the first switch module is connected to the output terminal of the first charging circuit. The first state machine is further configured to: when the first controller communicates with the electronic device, control the second terminal of the first switch module to be connected to the third terminal of the first switch module; and when the communication between the first controller and the electronic device ends, control the first terminal of the first switch module to be connected to the third terminal of the first switch module.

In a possible implementation, the first controller is further configured to: receive a first charging parameter sent by the electronic device, and send the first charging parameter to the first state machine, where the first charging parameter includes a charging voltage and a charging current that correspond to the second battery. The first state machine is further configured to control the second DC/DC circuit based on the first charging parameter.

In a possible implementation, the first controller is further configured to: receive voltage information of the second battery sent by the electronic device, determine, based on the voltage information of the second battery, the first charging parameter corresponding to the second battery, and send the first charging parameter to the first state machine. The first charging parameter includes the charging voltage and the charging current that correspond to the second battery. The first state machine is further configured to control the second DC/DC circuit based on the first charging parameter.

In a possible implementation, the first state machine is further configured to: when it is determined, based on the demodulation result, that the electronic device sends a preset pulse signal to the charging apparatus, determine that the electronic device is normally connected to the charging apparatus.

In a possible implementation, the first state machine is further configured to: when it is determined that the electronic device sends the preset pulse signal to the charging apparatus, maintain a current working state of the second DC/DC circuit, and send a fifth interrupt signal to the first controller, where the fifth interrupt signal indicates that the electronic device is currently in a fully-charged state or a trickle charging state.

In a possible implementation, the charging apparatus is a charging case. The second DC/DC circuit is further configured to: when the charging case is opened, output a preset voltage, or output a preset voltage in a preset cycle.

In a possible implementation, the second modulation signal and the first modulation acknowledgement signal further include an output parameter of the charging apparatus. The output parameter includes at least one of the following: an output current or an output voltage.

In a possible implementation, the charging terminal includes a first charging terminal and a second charging terminal.

In a possible implementation, the charging terminal is any one of a USB port, a pogo pin, or a metal dome. According to a second aspect, this application provides an electronic device, where the electronic device includes a second charging circuit, a second battery, and a power receiving terminal. The power receiving terminal is configured to be connected to a charging terminal of a charging apparatus and receive a direct current output by the charging terminal. A first terminal of the second charging circuit is connected to the power receiving terminal. A second terminal of the second charging circuit is connected to the second battery. A voltage output by the charging terminal is consistent with or has a preset multiple relationship with a charging voltage output by the second charging circuit to the second battery. The second charging circuit is configured to control the second charging circuit to be disconnected from the second battery, send a first modulation signal to the charging apparatus, receive a first modulation acknowledgement signal sent by the charging apparatus, and demodulate the first modulation acknowledgement signal, where the first modulation signal includes a first current, and the first current is used to identify that the electronic device initiates communication with the charging apparatus; or receive a second modulation signal sent by the charging apparatus, demodulate the second modulation signal, and when a demodulation result includes a first voltage, disconnect the second charging circuit from the second battery, and send a second modulation acknowledgement signal to the charging apparatus.

According to the solutions provided in this application, when the charging apparatus performs direct charging or voltage doubling charging on the electronic device, bidirectional communication between the charging apparatus and the electronic device can be implemented. In other words, communication may be initiated by the charging apparatus, or may be initiated by the electronic device. In addition, a communication process is simple and practical. In this communication manner, mutual identity authentication and in-position detection between the electronic device and the charging apparatus can be implemented, and no other detection sensor needs to be additionally disposed. Therefore, hardware costs are further reduced.

In a possible implementation, the first modulation signal and the second modulation acknowledgement signal are current modulation signals, and the first modulation acknowledgement signal and the second modulation signal are voltage modulation signals.

In a possible implementation, the electronic device further includes a first protection circuit. The first protection circuit is configured to: when the charging voltage output by the second charging circuit to the second battery is less than a first trigger voltage, control the second charging circuit to be disconnected from the second battery. The first voltage is less than the first trigger voltage.

In a possible implementation, the electronic device further includes a second protection circuit. The second protection circuit is configured to: when the charging voltage output by the second charging circuit to the second battery is greater than or equal to a second trigger voltage, control the second charging circuit to be disconnected from the second battery. The first voltage is greater than or equal to the second trigger voltage.

In a possible implementation, the second charging circuit specifically includes a second state machine and a second modem circuit. The second state machine is connected to the second modem circuit. The second modem circuit is configured to demodulate the obtained modulation signal, and send a demodulation result to the second state machine. The second state machine is configured to: control the second modem circuit to modulate an input current of the second charging circuit to form the first modulation signal, where the first modulation signal carries a first feature character string; and determine, based on a demodulation result corresponding to the first modulation acknowledgement signal, whether the electronic device is connected to the charging apparatus.

In a possible implementation, the demodulation result corresponding to the first modulation acknowledgement signal includes a second feature character string. The second charging circuit is specifically configured to: when the second feature character string is a second preset feature character string, determine that the electronic device is connected to the charging apparatus.

In a possible implementation, the second charging circuit is configured to: when the first modulation acknowledgement signal is not received, determine that the electronic device does not match the charging apparatus.

In a possible implementation, the second state machine is further configured to: when a demodulation result corresponding to the second modulation signal is obtained, control the second modem circuit to modulate the input current of the second charging circuit, to form the second modulation acknowledgement signal.

In a possible implementation, the electronic device further includes a second controller. A first communication interface of the second controller is connected to the second state machine. The second state machine is further configured to: if it is determined that the electronic device is connected to the charging apparatus, send a third interrupt signal to the first communication interface of the second controller, where the third interrupt signal indicates that the electronic device is connected to the charging apparatus.

In a possible implementation, the electronic device further includes a second comparator. The second comparator is configured to compare an input voltage of the second charging circuit with a preset voltage, and send an obtained second comparison result to the second state machine. The second state machine is further configured to: when it is determined, based on the second comparison result, that the input voltage is less than the preset voltage, send a fourth interrupt signal to the second controller, where the fourth interrupt signal indicates to the second controller that the electronic device is disconnected from the charging apparatus.

In a possible implementation, the electronic device further includes a second comparator. The second comparator is configured to compare an input voltage of the second charging circuit with a preset voltage, and send an obtained second comparison result to the second state machine. The second state machine is further configured to: when it is determined, based on the second comparison result, that the input voltage is less than the preset voltage, control the second modem circuit to send a current detection signal to the power receiving terminal; and when a voltage of the power receiving terminal exceeds a preset threshold voltage in preset time, send a fourth interrupt signal to the second controller, where the fourth interrupt signal indicates to the second controller that the electronic device is disconnected from the charging apparatus. In this implementation, when the charging apparatus stops outputting a voltage, the electronic device can be prevented from mistakenly determining that the electronic device is out of the charging apparatus.

In a possible implementation, the second charging circuit further includes a second switch module and a third switch module. A first terminal of the second switch module is connected to an input terminal of the second charging circuit, a second terminal of the second switch module is connected to a second communication interface of the second controller, a third terminal of the second switch module is connected to a first terminal of the third switch module, and a second terminal of the third switch module is connected to the second battery. The second state machine is further configured to: when the second controller communicates with the charging apparatus, control the first terminal of the second switch module to be connected to the second terminal of the second switch module; and when the communication between the second controller and the charging apparatus ends, control the first terminal of the second switch module to be connected to the third terminal of the second switch module.

In a possible implementation, the third switch module includes a first MOS transistor and a second MOS transistor. The first MOS transistor and the second MOS transistor are connected in series, and an anti-parallel diode of the first MOS transistor and an anti-parallel diode of the second MOS transistor are in opposite directions.

In a possible implementation, the second controller is further configured to send a first charging parameter to the charging apparatus, where the first charging parameter includes a charging voltage and a charging current that correspond to the second battery.

In a possible implementation, the second controller is further configured to send voltage information of the second battery to the charging apparatus.

In a possible implementation, the second state machine is further configured to: when the electronic device is in a fully-charged state or a trickle charging state, control the second modem circuit to modulate the input current of the second charging circuit, to form a preset pulse signal and send the preset pulse signal to the charging apparatus.

In a possible implementation, the first modulation signal and the second modulation acknowledgement signal further include a charging parameter of the electronic device. The charging parameter includes at least one of the following: the charging current corresponding to the second battery, the charging voltage corresponding to the second battery, or a voltage of the second battery.

In a possible implementation, the charging terminal includes a first charging terminal and a second charging terminal.

In a possible implementation, the charging terminal is one of a USB port, a pogo pin, or a metal dome.

According to a third aspect, this application further provides a communication method, applied to a charging apparatus. The method includes the following steps.

A first charging circuit receives a first modulation signal sent by an electronic device, and demodulates the first modulation signal; and when a demodulation result includes a first current, sends a first modulation acknowledgement signal to an electronic device, where the first current is used to identify that the electronic device initiates communication with the charging apparatus; or a first charging circuit sends a second modulation signal to an electronic device, where the second modulation signal includes a first voltage, and the first voltage is used to disconnect a second charging circuit of the electronic device from a second battery; and the first charging circuit receives a second modulation acknowledgement signal sent by the electronic device, and demodulates the second modulation acknowledgement signal.

According to the method, when the charging apparatus performs direct charging or voltage doubling charging on the electronic device, bidirectional communication between the charging apparatus and the electronic device can be implemented. In addition, a communication process is simple and practical. In this communication manner, mutual identity authentication and in-position detection between the electronic device and the charging apparatus can be implemented, and no other detection sensor needs to be additionally disposed. Therefore, hardware costs are further reduced.

According to a fourth aspect, this application further provides a communication method, applied to the electronic device provided in the foregoing aspects. The method includes:
disconnecting a second charging circuit from a second battery; and
sending, by the second charging circuit, a first modulation signal to a charging apparatus, where the first modulation signal includes a first current, and the first current is used to identify that the electronic device initiates communication with the charging apparatus; and receiving, by the second charging circuit, a first modulation acknowledgement signal sent by the charging apparatus, and demodulating the first modulation acknowledgement signal; or
receiving, by the second charging circuit, a second modulation signal sent by the charging apparatus, demodulating the second modulation signal, and when a demodulation result includes a first voltage, disconnecting the second charging circuit from the second battery, and sending a second modulation acknowledgement signal to the charging apparatus.

According to the method, when the charging apparatus performs direct charging or voltage doubling charging on the electronic device, bidirectional communication between the charging apparatus and the electronic device can be implemented. In addition, a communication process is simple and practical. In this communication manner, mutual identity authentication and in-position detection between the electronic device and the charging apparatus can be implemented, and no other detection sensor needs to be additionally disposed. Therefore, hardware costs are further reduced.

According to a fifth aspect, this application further provides a charging system. The charging system includes a charging apparatus and an electronic device. The charging apparatus is configured to charge the electronic device. The charging apparatus includes a first DC/DC circuit, a first charging circuit, a first battery, and a charging terminal. The first DC/DC circuit is configured to charge the first battery by using an input direct current, and output a direct current to an input terminal of the first charging circuit. An output terminal of the first charging circuit is connected to the charging terminal. The electronic device includes a second charging circuit, a second battery, and a power receiving terminal. The power receiving terminal is configured to be connected to the charging terminal of the charging apparatus and receive a direct current output by the charging terminal. A first terminal of the second charging circuit is connected to the power receiving terminal, a second terminal of the second charging circuit is connected to the second battery, and a voltage output by the charging terminal is consistent with or has a preset multiple relationship with a charging voltage output by the second charging circuit to the second battery.

The second charging circuit is configured to disconnect the second charging circuit from the second battery, send a first modulation signal to the charging apparatus, receive a first modulation acknowledgement signal sent by the charging apparatus, and demodulate the first modulation acknowledgement signal, where the first modulation signal includes a first current, and the first current is used to identify that the electronic device initiates communication with the charging apparatus; or receive a second modulation signal sent by the charging apparatus, demodulate the second modulation signal, and when a demodulation result of the second modulation signal includes a first voltage, disconnect the second charging circuit from the second battery, and send a second modulation acknowledgement signal to the charging apparatus.

The first charging circuit is configured to receive the first modulation signal sent by the electronic device, demodulate the first modulation signal, and when a demodulation result includes the first current, send the first modulation acknowledgement signal to the electronic device; or send the second modulation signal to the electronic device, receive the second modulation acknowledgement signal sent by the electronic device, and demodulate the second modulation acknowledgement signal, where the second modulation signal includes the first voltage, and the first voltage is used to disconnect the second charging circuit of the electronic device from the second battery.

When the foregoing charging system may be an earphone charging system, the charging system includes two electronic devices that each correspond to one earphone. In this case, the charging apparatus may charge the two connected earphones at the same time, or when only one earphone is connected, charge the earphone. Alternatively, the electronic device of the charging system may be a smart band or a smartwatch.

According to the charging system provided in this application, the charging apparatus can perform direct charging or voltage doubling charging on the electronic device, and bidirectional communication between the electronic device and the charging apparatus is implemented. Bidirectional in-position detection and identity identification can be implemented through the bidirectional communication, and reliability and accuracy of the in-position detection are high. The foregoing implementation may be implemented based on two metal terminals. To be specific, the charging apparatus only needs to include two charging terminals, and the electronic device only needs to include two power receiving terminals. This implementation has high integration, and can implement an in-position detection effect without relying on a component like a Hall sensor or an infrared light sensor, thereby reducing hardware costs.

According to a sixth aspect, this application further provides a chip. The chip is used in a charging apparatus, a first charging circuit is integrated into the chip, and the chip includes an input port and an output port. The input port is an input terminal of the first charging circuit, and is configured to be connected to an output terminal of a first DC/DC circuit of the charging apparatus. The output port is an output terminal of the first charging circuit, and is configured to be connected to a charging terminal. The first charging circuit is configured to: receive a first modulation signal sent by an electronic device, demodulate the first modulation signal, and when a demodulation result includes a first current, send a first modulation acknowledgement signal to the electronic device, where the first current is used to identify that the electronic device initiates communication with the charging apparatus; or send a second modulation signal to an electronic device, receive a second modulation acknowledgement signal sent by the electronic device, and demodulate the second modulation acknowledgement signal, where the second modulation signal includes a first voltage, and the first voltage is used to disconnect a second charging circuit of the electronic device from a second battery.

According to a seventh aspect, this application further provides another chip. The chip is used in an electronic device, a second charging circuit is integrated into the chip, and the chip includes an input port and an output port. The input port is a first terminal of the second charging circuit, and is configured to be connected to a power receiving terminal. The output port is a second terminal of the second charging circuit, and is configured to be connected to a second battery of an electronic device. The second charging circuit is configured to disconnect the second charging circuit from the second battery, send a first modulation signal to a charging apparatus, receive a first modulation acknowledgement signal sent by the charging apparatus, and demodulate the first modulation acknowledgement signal, where the first modulation signal includes a first current, and the first current is used to identify that the electronic device initiates communication with the charging apparatus; or receive a second modulation signal sent by a charging apparatus, demodulate the second modulation signal, and when a demodulation result includes a first voltage, disconnect the second charging circuit from the second battery, and send a second modulation acknowledgement signal to the charging apparatus.

### BRIEF DESCRIPTION OF DRAWINGS

FIG. 1 is a diagram 1 of TWS earphones and a charging case;
FIG. 2 is another diagram of TWS earphones and a charging case;
FIG. 3 is a diagram of a charging apparatus and an electronic device;
FIG. 4 is a diagram of a charging system;
FIG. 5 is a diagram of a charging apparatus and an electronic device according to an embodiment of this application;
FIG. 6 is another diagram of a charging apparatus and an electronic device according to an embodiment of this application;
FIG. 7 is a diagram 1 of a waveform of a modulation signal according to an embodiment of this application;
FIG. 8 is a diagram 2 of a waveform of a modulation signal according to an embodiment of this application;
FIG. 9 is a diagram 3 of a waveform of a modulation signal according to an embodiment of this application;
FIG. 10A is another diagram of a charging apparatus and an electronic device according to an embodiment of this application;
FIG. 10B is a schematic circuit of a switched capacitor converter 2023 according to an embodiment of this application;
FIG. 10C is a diagram of a charging phase according to an embodiment of this application;
FIG. 11 is another diagram of a charging apparatus and an electronic device according to an embodiment of this application;
FIG. 12 is a diagram of a feature character string according to an embodiment of this application;
FIG. 13 is another diagram of a charging apparatus and an electronic device according to an embodiment of this application;
FIG. 14 is a diagram 4 of a waveform of a modulation signal according to an embodiment of this application;
FIG. 15 is another diagram of a charging apparatus and an electronic device according to an embodiment of this application;
FIG. 16 is another diagram of a charging apparatus and an electronic device according to an embodiment of this application;
FIG. 17 is a flowchart of a communication method according to an embodiment of this application;
FIG. 18 is a flowchart of another communication method according to an embodiment of this application;
FIG. 19A and FIG. 19B are a flowchart of another communication method according to an embodiment of this application;
FIG. 20 is a flowchart of another communication method according to an embodiment of this application;
FIG. 21A to FIG. 21C are a flowchart of another communication method according to an embodiment of this application;
FIG. 22A and FIG. 22B are a flowchart of another communication method according to an embodiment of this application;
FIG. 23 is a diagram of a chip according to an embodiment of this application; and
FIG. 24 is a diagram of another chip according to an embodiment of this application.

### DESCRIPTION OF EMBODIMENTS

To enable a person skilled in the art to understand solutions of this application more clearly, the following first describes an application scenario of the technical solutions of this application.

In the solutions of this application, bidirectional communication between a charging apparatus and an electronic device can be implemented. A type of the electronic device is not specifically limited in this application. The electronic device may be TWS earphones, a smartwatch, a smart band, or the like. The charging apparatus is a charging apparatus corresponding to the electronic device. In other words, when the electronic device is TWS earphones, the charging apparatus is a charging case; or when the electronic device is a smartwatch or a smart band, the charging apparatus is a charging cradle.

An example in which the electronic device is TWS earphones is used for description. Refer to FIG. 1 and FIG. 2. FIG. 2 is another diagram of TWS earphones and a charging case.

A charging interface (not shown in the figure) is disposed on a charging apparatus 10. The charging apparatus 10 is connected to an adapter 30 through a cable inserted into the charging interface. After the adapter 30 is connected to a power supply, the charging apparatus 10 may be charged, so that a battery of the charging apparatus 10 has a specific amount of power. In this case, when the charging apparatus 10 is connected to an electronic device 20, the charging apparatus 10 may further supply power to the electronic device 20. Therefore, when the charging apparatus 10 is disconnected from the adapter 30, the charging apparatus 10 may transfer, to the electronic device 20, electric energy provided by the battery of the charging apparatus 10.

In addition, the charging apparatus 10 may be further wirelessly charged. In other words, the adapter 30 does not need to be directly connected to the charging apparatus 10. In this case, the adapter 30 may be connected to a wireless charging device (for example, a wireless charging cradle) that matches the charging apparatus 10, and the charging apparatus 10 is wirelessly charged through the wireless charging device.

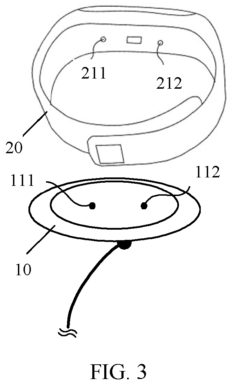

When the electronic device is a smartwatch or a smart band, refer to the following diagram of a charging apparatus and an electronic device shown in FIG. 3.

A charging apparatus 10 shown in FIG. 3 is a charging cradle. The charging cradle includes a first charging terminal 111 and a second charging terminal 112. An electronic device 20 includes a first power receiving terminal 211 and a second power receiving terminal 212.

When the charging apparatus 10 charges the electronic device 20, the electronic device 20 is placed on the charging apparatus 10, so that the first power receiving terminal 211 is connected to the first charging terminal 111, and the second power receiving terminal 212 is connected to the second charging terminal 112. In this way, the charging apparatus 11 may transfer electric energy to the electronic device 20, to charge a battery included in the electronic device 20. In this case, in some embodiments, the charging apparatus 10 may not include a battery.

Types of a charging terminal and a power receiving terminal are not limited in this application. For example, the charging terminal may be a USB port, a pogo pin (which is also referred to as a spring connector or a spring pin connector), or a metal dome, or may be made of another conductive material. Certainly, a type of the power receiving terminal is generally the same as that of the charging terminal. In other words, the power receiving terminal is correspondingly a USB port, a pogo pin, or a metal dome, or may be made of another conductive material.

The following uses an earphone charging system as an example for description with reference to a specific circuit.

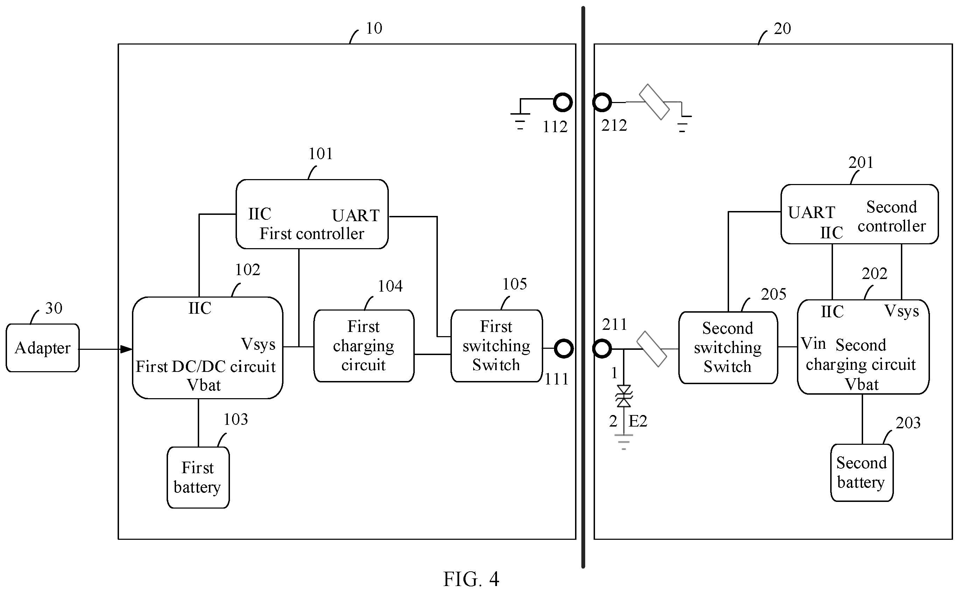

FIG. 4 is a diagram of a charging system.

The charging system includes a charging apparatus 10 and an electronic device 20.

The charging apparatus 10 includes a first controller 101, a first DC/DC circuit 102, a first battery 103, a first charging circuit 104, and a first switching switch 105.

The electronic device 20 includes a second controller 201, a second charging circuit 202, a second battery 203, and a second switching switch 205.

As shown in the figure, the charging apparatus 10 is connected to an external power supply through an adapter 30. The first DC/DC circuit 102 is configured to charge the first battery 103, and is further configured to supply power to the first charging circuit 104.

An input terminal of the first charging circuit 104 is configured to receive a direct current output by the first DC/DC circuit 102, an output terminal of the first charging circuit 104 is connected to a first charging terminal 111 through the first switching switch 105, and the first charging terminal 111 is configured to be connected to a first power receiving terminal 211 of the electronic device 20.

An inter-integrated circuit (Inter-Integrated Circuit, IIC) bus interface of the first controller 101 is connected to an IIC interface of the first DC/DC circuit 102, so that the first controller 101 can communicate with the first DC/DC circuit 102. A universal asynchronous receiver/transmitter (Universal Asynchronous Receiver/Transmitter, UART) interface of the first controller 101 is connected to the first charging terminal 111 through the first switching switch 105.

In the electronic device, the second charging circuit 202 is connected to the first power receiving terminal 211 through the second switching switch 205, and a UART interface of the second charging circuit 202 is connected to the first power receiving terminal 211 through the second switching switch 205.

In FIG. 4, a Vsys interface of the first DC/DC circuit 102 is a port through which the first DC/DC circuit 102 supplies power to the first controller 101 and the first charging circuit 104. A meaning of Vsys of the first DC/DC circuit 102 in the following accompanying drawings of this application is the same. Details are not described again.

A Vbat interface of the first DC/DC circuit 102 in FIG. 4 represents a port through which the first DC/DC circuit 102 is connected to the first battery 103, and a Vbat interface of the second charging circuit 202 represents a port through which the second charging circuit 202 is connected to the second battery 203. Meanings of Vbat in a charging apparatus and Vbat in an electronic device in the following accompanying drawings are the same. Details are not described again.

Vsys of the second charging circuit 202 in FIG. 4 represents a port, in the electronic device, through which the second battery 203 supplies power to the second controller 201. Vsys of the second charging circuit 202 in the following accompanying drawings has a same meaning. Details are not described again.

In this implementation, when the charging apparatus 10 communicates with the electronic device 20, the first switching switch 105 and the second switching switch 205 are switched to a communication channel under initiation of the charging apparatus 10. In this case, the UART interface of the first controller 101 is connected to the UART interface of the second controller 201 through the first switching switch 105, the first charging terminal 111, the first power receiving terminal 211, and the second switching switch 205 in sequence, so that the first controller 101 communicates with the second controller 201.

After the communication is completed, the first switching switch 105 and the second switching switch 205 are switched to a charging channel under initiation of the charging apparatus 10.

The foregoing communication process is actively initiated by the charging apparatus 10, and the electronic device 20 cannot actively initiate communication.

However, with development of fast charging technologies, the electronic device may support a direct charging mode and/or a voltage doubling charging mode. When power transmission line loss is ignored, in the direct charging mode, a voltage of the power receiving terminal of the electronic device is equal to a charging voltage of the second battery. In the voltage doubling charging mode, the voltage of the power receiving terminal of the electronic device is in a multiple relationship with the charging voltage of the second battery. For example, the voltage of the power receiving terminal is twice or more than twice the charging voltage of the second battery.

To support the direct charging mode and/or the voltage doubling charging mode, a mode of communication between the electronic device and the charging apparatus also needs to support the direct charging mode and/or the voltage doubling charging mode. This needs to implement bidirectional communication between the electronic device and the charging case. In other words, the charging apparatus supports to actively initiate communication, and the electronic device also needs to be able to actively initiate communication, to implement functions such as determining whether the electronic device is currently in position, whether the charging apparatus matches the electronic device, and sending/obtaining charging information.

However, in the foregoing solution corresponding to FIG. 4, only the charging apparatus can initiate communication, and the electronic device cannot actively initiate communication. In other words, bidirectional communication between the electronic device and the charging case is not supported. Therefore, the foregoing communication manner cannot meet a requirement of the direct charging mode and/or the voltage doubling charging mode.

To resolve the foregoing problem, embodiments of this application provide a charging apparatus, an electronic device, a communication method, and a charging system, so that bidirectional communication between the electronic device and the charging apparatus can be implemented when the charging apparatus performs direct charging or voltage doubling charging on the electronic device. Bidirectional in-position detection and identity identification can be implemented through the bidirectional communication, and reliability and accuracy are high. In addition, the foregoing solutions can be implemented based on the fact that the charging apparatus includes two charging terminals, and the electronic device includes two power receiving terminals, and no additional charging terminal needs to be disposed. This has high integration.

To make a person skilled in the art understand solutions in this application more clearly, the following describes the technical solutions in embodiments of this application with reference to the accompanying drawings in embodiments of this application.

The following terms such as "first" and "second" are merely intended for a purpose of description, and shall not be interpreted as indicating or implying relative importance or implying a quantity of indicated technical features. Therefore, a feature limited by "first", "second", or the like may explicitly or implicitly include one or more features. In the descriptions of this application, unless otherwise specified, "a plurality of" means two or more than two.

In addition, in this application, position terms such as "top" and "bottom" may include but are not limited to being defined relative to positions of schematically placed components in the accompanying drawings. It should be understood that these position terms are relative concepts used for relative description and clarification, and may correspondingly change based on changes in the positions of the components in the accompanying drawings.

In this application, unless otherwise specified and limited, the term "connection" should be understood in a broad sense. For example, the "connection" may be a fixed connection, a detachable connection, integration, a direct connection, or an indirect connection through an intermediate medium. In addition, the term "coupling" may be a manner of implementing an electrical connection for signal transmission. The "coupling" may be a direct electrical connection, or may be an indirect electrical connection through an intermediate medium.

Embodiments of this application provide a charging apparatus and an electronic device. The following provides specific descriptions with reference to the accompanying drawings.

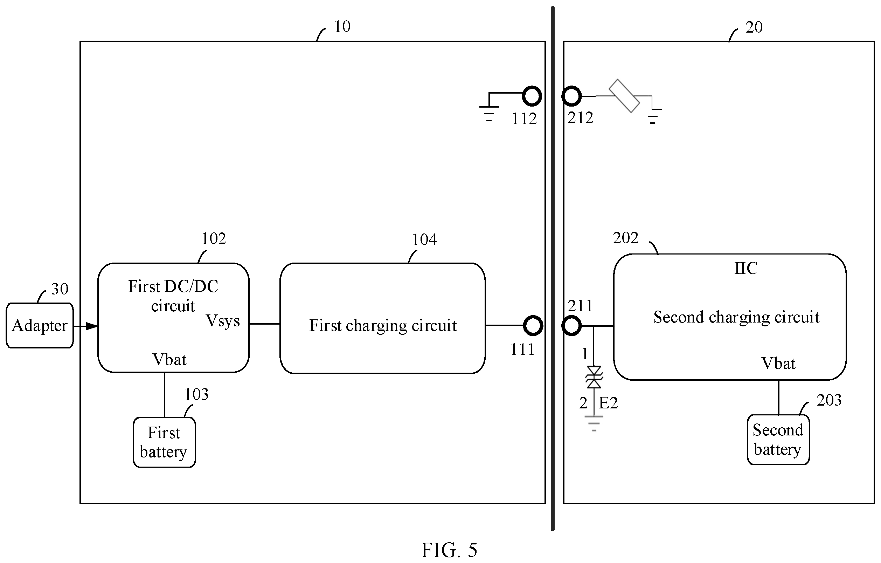

FIG. 5 is a diagram of a charging apparatus and an electronic device according to an embodiment of this application.

A charging apparatus 10 includes a first DC/DC circuit 102, a first battery 103, a first charging circuit 104, and a charging terminal. The charging terminal includes a first charging terminal 111 and a second charging terminal 112.

An electronic device 20 includes a second charging circuit 202, a second battery 203, and a power receiving terminal. The power receiving terminal includes a first power receiving terminal 211 and a second power receiving terminal 212.

When the electronic device 20 is connected to the charging apparatus 10, the first charging terminal 111 is connected to the first power receiving terminal 211, and the second charging terminal 112 is connected to the second power receiving terminal 212. The power receiving terminal is configured to receive a direct current output by the charging terminal.

The first DC/DC circuit 102 obtains a direct current from an adapter 30, performs direct current/direct current conversion on the obtained direct current to charge the first battery 103, and performs direct current/direct current conversion on the obtained direct current to provide an obtained direct current to an input terminal of the first charging circuit 104. In addition, the first DC/DC circuit 102 is further configured to: when the charging apparatus 10 is not connected to the adapter 30, perform direct current conversion on a direct current obtained from the first battery 103, and then transmit a converted direct current to the input terminal of the first charging circuit 104.

In a possible implementation, the charging apparatus 10 includes a charging interface, and is connected to the adapter 30 through a cable inserted into the charging interface. In another possible implementation, the adapter 30 does not need to be directly connected to the charging apparatus 10. The adapter 30 may be connected, through a cable, to a wireless charging device (for example, a wireless charging cradle) that matches the charging apparatus 10, and then the wireless charging device wirelessly charges the charging apparatus 10. It should be noted that, in this implementation, an input terminal of the first DC/DC circuit 102 further includes a cascaded power receiving coil and a rectifier circuit. The power receiving coil is configured to: convert energy sent by the wireless charging device into an alternating current, and transmit the alternating current to the rectifier circuit. The rectifier circuit is configured to: convert the alternating current into a direct current, and transmit the direct current to the first DC/DC circuit 102.

An output terminal of the first charging circuit 104 is connected to the first charging terminal 111.

A first terminal of the second charging circuit 202 is connected to the first power receiving terminal 211, and a second terminal of the second charging circuit 202 is connected to the second battery 203.

The charging apparatus 10 and the electronic device 20 provided in embodiments of this application support a direct charging mode or both a direct charging mode and a voltage doubling charging mode.

When the electronic device 20 is in the direct charging mode, no additional power conversion circuit is connected between the power receiving terminal of the electronic device 20 and the second battery 203. In other words, in this case, a voltage output by the first charging terminal 111 is consistent with a charging voltage output by the second charging circuit 202 to the second battery 203.

It may be understood that, in actual application, the voltage output by the first charging terminal 111 is not completely equal to a charging voltage of the second battery. This is because impedance exists on a line, and therefore a voltage drop is caused. The voltage drop caused by the line impedance may be ignored compared with the charging voltage. Therefore, it may be considered that the voltage output by the first charging terminal 111 is consistent with the charging voltage output by the second charging circuit 202 to the second battery 203.

When the electronic device 20 is in the voltage doubling charging mode, a switched capacitor converter (switched capacitor converter) is disposed between the power receiving terminal 211 of the electronic device 20 and the second battery 203. The switched capacitor converter is configured to enable the voltage output by the first charging terminal 111 to have a preset multiple relationship with the charging voltage output by the second charging circuit 202 to the second battery 203. The preset multiple relationship may be 2:1, 3:1, 4:1, or the like. This is not specifically limited in embodiments of this application. The preset multiple depends on the switched capacitor converter.

A specific implementation of the first charging circuit 104 is not limited in embodiments of this application. In some embodiments, the first charging circuit 104 may include a DC/DC converter that has a boost and/or buck regulator capability and a current regulator capability, for example, may include a low dropout linear voltage regulator (Low Dropout Regulator, LDO), a boost (Boost) circuit, a buck (Buck) circuit, or a buck-boost (Buck-Boost) circuit.

A specific implementation of the second charging circuit 202 is not limited in embodiments of this application. In some embodiments, the second charging circuit 202 may include an over voltage/over current protection circuit, or include an under voltage protection circuit.

The following specifically describes an implementation of bidirectional communication between the charging apparatus and the electronic device.

When the charging apparatus 10 performs direct charging or voltage doubling charging on the electronic device 20, both a voltage and a current on a charging line are clamped by the second battery 203. Therefore, when the charging apparatus communicates with the electronic device 20, a charging path for the second battery 203 needs to be cut off, that is, the second charging circuit 202 is disconnected from the second battery 203, to prevent the second battery 203 from affecting a signal on the charging line.

The bidirectional communication between the charging apparatus 10 and the electronic device 20 includes: communication initiated by the electronic device 20 with the charging apparatus 10, and communication initiated by the charging apparatus 10 for the electronic device 20.

The following first describes a process of communication initiated by the electronic device 20 with the charging apparatus 10.

In some embodiments, when detecting that the power receiving terminal is connected to an input current, the electronic device 20 needs to determine whether the electronic device 20 is currently connected to the charging apparatus 10, and determine whether the currently connected charging apparatus 10 matches the electronic device 20, that is, perform identity authentication on the charging apparatus 10. When detecting that the power receiving terminal has no input, the electronic device 20 needs to determine whether the electronic device 20 is currently disconnected from the charging apparatus 10. Alternatively, the electronic device 20 may be configured to initiate communication with the charging apparatus 10 in a specific cycle, to determine that a connection state is normal, or exchange a charging parameter like a voltage parameter or a current parameter. In the foregoing case, a condition for initiating the communication with the charging apparatus 10 by the electronic device 20 is met.

When the electronic device 20 needs to initiate the communication with the charging apparatus 10, the second charging circuit 202 first controls the second charging circuit 202 to be disconnected from the second battery 203, so as to prevent the second battery 203 from clamping a voltage and a current on the line. In this case, the second charging circuit 202 temporarily stops charging the second battery 203.

The second charging circuit 202 sends a first modulation signal to the charging apparatus 10 through the first power receiving terminal 211. The first modulation signal includes a first current, and the first current is used to identify that the electronic device 20 initiates the communication with the charging apparatus 10 in this case.

In a communication protocol predetermined by the charging apparatus 10 and the electronic device 20, it is predetermined that a meaning represented by the first current is that the electronic device 20 initiates the communication in this case.

After the first charging circuit 104 of the charging apparatus 10 receives the first modulation signal, the charging apparatus 10 obtains the first current, that is, determines that the electronic device 20 initiates the communication with the charging apparatus 10 in this case. The first charging circuit 104 replies with a first modulation acknowledgement signal to the electronic device 20 through the first charging terminal 111 according to the predetermined communication protocol.

In some embodiments, the first current is located at a head position of the first modulation signal. When the first charging circuit 104 of the charging apparatus 10 receives the second modulation signal, the first charging circuit 104 first receives the first current, and the first charging circuit 104 may determine that the electronic device 20 initiates the communication.

In other words, the communication initiated by the electronic device 20 with the charging apparatus 10 is implemented.

The following describes a process of communication initiated by the charging apparatus 10 with the electronic device.

In some embodiments, when detecting that the charging terminal is connected to an output current, the charging apparatus 10 needs to determine whether the charging apparatus 10 is currently connected to the electronic device 20, and whether the currently connected electronic device 20 matches the charging apparatus 10, that is, perform identity authentication on the electronic device 20. When detecting that the charging terminal has no output current, the charging apparatus 10 needs to determine whether the charging apparatus 10 is currently disconnected from the electronic device 20. Alternatively, the charging apparatus 10 may be configured to initiate communication with the electronic device 20 in a specific cycle, to determine that a connection state is normal, or exchange a charging parameter like a voltage parameter or a current parameter. In the foregoing case, a condition for initiating the communication with the electronic device 20 by the charging apparatus 10 is met.

When the condition for initiating the communication with the electronic device 20 by the charging apparatus 10 is met, the first charging circuit 104 sends a second modulation signal to the electronic device 20 through the first charging terminal 111. The second modulation signal includes a first voltage, and the first voltage is used to disconnect the second charging circuit 202 of the electronic device 20 from the second battery 203, to prevent the second battery 203 from clamping a voltage and a current.

In some embodiments, the first voltage is located at a head position of the second modulation signal. When receiving the second modulation signal, the second charging circuit 202 of the electronic device 20 first receives the first voltage, so that the second charging circuit 202 is disconnected from the second battery 203 in time.

Then, the second charging circuit 202 replies with a second modulation acknowledgement signal to the charging apparatus 10 through the power receiving terminal based on the second modulation signal and a predetermined communication protocol.

The second charging circuit 202 of the electronic device 20 receives the second modulation acknowledgement signal.

In other words, the communication initiated by the charging apparatus 10 with the electronic device 20 is implemented.

In some embodiments, the first voltage included in the second modulation signal may be used as a part of the communication protocol of the charging apparatus 10 and the electronic device 20. In other words, a charging interrupt of the second battery 203 caused by the fact that the charging apparatus 10 initiates the communication with the electronic device 20 may be considered as a normal communication process, and no interrupt needs to be reported. This further simplifies the communication process.

In conclusion, according to the solutions provided in embodiments of this application, when the charging apparatus performs direct charging or voltage doubling charging on the electronic device, bidirectional communication between the charging apparatus and the electronic device can be implemented. In addition, a communication process is simple and practical. In this communication manner, mutual identity authentication and in-position detection between the electronic device and the charging apparatus can be implemented, and no other detection sensor needs to be additionally disposed. Therefore, hardware costs are further reduced.

The electronic device may support direct charging, or may support both direct charging and voltage doubling charging. The following first describes an implementation in which the electronic device supports only direct charging.

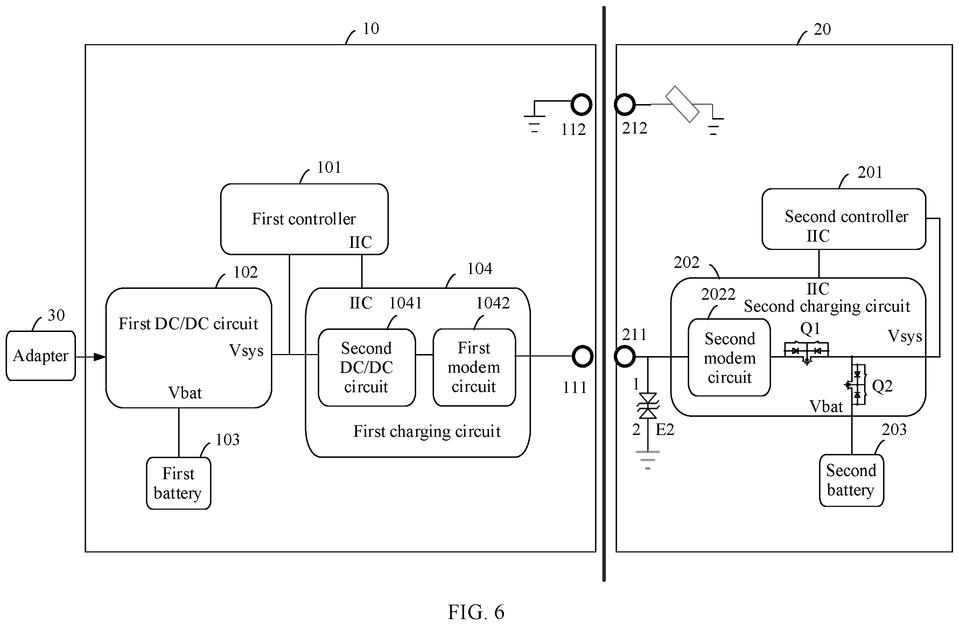

FIG. 6 is another diagram of a charging apparatus and an electronic device according to an embodiment of this application.

A charging apparatus 10 shown in the figure is configured to charge an electronic device 20.

The charging apparatus 10 includes a first controller 101, a first DC/DC circuit 102, a first charging circuit 104, and a charging terminal. The charging terminal includes a first charging terminal 111 and a second charging terminal 112.

The first charging circuit 104 includes a second DC/DC circuit 1041 and a first modem circuit 1042.

An input terminal of the second DC/DC circuit 1041 is connected to an input terminal of the first charging circuit 104, an output terminal of the second DC/DC circuit 1041 is connected to a first terminal of the first modem circuit 1042, and a second terminal of the first modem circuit 1042 is connected to the first charging terminal 111.

The electronic device 20 includes a second controller 201, a second charging circuit 202, a second battery 203, and a power receiving terminal. The power receiving terminal includes a first power receiving terminal 211 and a second power receiving terminal 212.

The second charging circuit 202 includes a second modem circuit 2022, a first protection circuit, a switch Q1, and a switch Q2.

When determining that a current charging phase is a constant current charging phase, the second controller 201 controls both Q1 and Q1 to be turned on, so that impedance of the second charging circuit 202 is minimized. In this case, the charging apparatus 10 performs direct charging on the second battery 203 of the electronic device 20.

The first protection circuit is configured to: when a current of the second charging circuit 202 is less than a first trigger current, or a charging voltage output by the second charging circuit to the second battery is less than a first trigger voltage, control the second charging circuit to be disconnected from the second battery, and also control Q1 in the figure to be turned off, or control both Q1 and Q2 to be turned off.

In this case, the first protection circuit can cut off a line connected to the second battery 203 when an under voltage or a backfeed current occurs in the second charging circuit 202. In other words, the first protection circuit in this case is equivalent to an under voltage lock out (under voltage lock out, UVLO) circuit.

When the electronic device 20 is connected to the charging apparatus 10, the first charging terminal 111 is connected to the first power receiving terminal 211, and the second charging terminal 112 is connected to the second power receiving terminal 212.

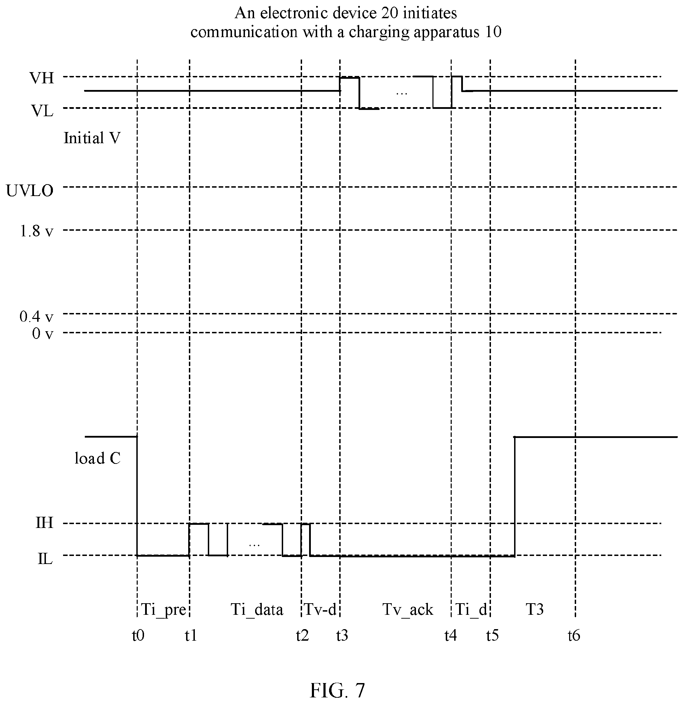

FIG. 7 is a diagram 1 of a waveform of a modulation signal according to an embodiment of this application.

FIG. 7 is a diagram of initiating communication by an electronic device 20 with a charging apparatus 10.

Herein, load C in the figure corresponds to an input current of the electronic device 20, and after a charging terminal is connected to a power receiving terminal, load C is an output current of the charging apparatus 10.

Initial V in the figure corresponds to an input voltage of the electronic device 20. After the charging terminal is connected to the power receiving terminal, Initial V is an output voltage of the charging apparatus 10.

When the electronic device 20 needs to initiate the communication with the charging apparatus 10, a second charging circuit 202 first controls to the second charging circuit 202 to be disconnected from a second battery 203, so as to prevent the second battery 203 from clamping a voltage and a current. In other words, Q1 is controlled to be turned off, or both Q1 and Q2 may be controlled to be turned off.

Then, a second modem circuit 2022 modulates an input current of the second charging circuit 202 to form a first modulation signal, where the first modulation signal is a current modulation signal.

Specifically, the second modem circuit 2022 first modulates the input current of the second charging circuit 202 in a time period from t0 to t1, so that the input current is as low as IL. This corresponds to a Ti_pre phase of the first modulation signal in FIG. 7, that is, the first modulation signal carries a first current through modulation.

The Ti_pre phase represents that the electronic device temporarily switches between a charging mode and a communication modulation mode. In other words, the electronic device 20 initiates communication with the charging apparatus 10. A specific value of IL is not limited in embodiments of this application. In a possible implementation, the value of IL is 0. In a communication protocol predetermined by the charging apparatus 10 and the electronic device 20, a meaning of the first current may be clarified, that is, it is clarified that the first current is an identifier indicating that the electronic device 20 initiates the communication with the charging apparatus.

After the electronic device 20 temporarily switches between the charging mode and the communication modulation mode, the second modem circuit 2022 starts to perform modulation to form a communication waveform, where the communication waveform corresponds to a Ti_data phase of the first modulation signal in FIG. 7.

The Ti_data phase in the first modulation signal is related to the communication protocol predetermined by the charging apparatus 10 and the electronic device 20. This is not specifically limited in embodiments of this application.

The second charging circuit 202 sends the first modulation signal to the charging apparatus 10 through the power receiving terminal.

After the first charging circuit 104 of the charging apparatus 10 receives the first modulation signal, a first modem circuit 1042 of the first charging circuit 104 demodulates the first modulation signal. If the demodulation fails, it indicates that the first modulation signal sent by the electronic device 20 in this case does not meet the predetermined communication protocol. In other words, the electronic device 20 does not match the charging apparatus 10.

If the demodulation succeeds, the first charging circuit 10 controls, based on the demodulation result and the predetermined communication protocol, the first modem circuit 1042 to modulate an output voltage of the first charging circuit 10, and replies with a first modulation acknowledgement signal to the electronic device 20 through the charging terminal. The first modulation acknowledgement signal is a voltage modulation signal, and corresponds to a Tv_ack phase in a time period from t3 to t4 in FIG. 7.

A specific waveform state of the first modulation acknowledgement signal is related to the communication protocol predetermined by the charging apparatus 10 and the electronic device 20. This is not specifically limited in embodiments of this application.

In other words, the communication initiated by the electronic device 20 with the charging apparatus 10 is implemented.

The following describes a process of communication initiated by the charging apparatus 10 with the electronic device 20.

The following describes a first possible implementation.

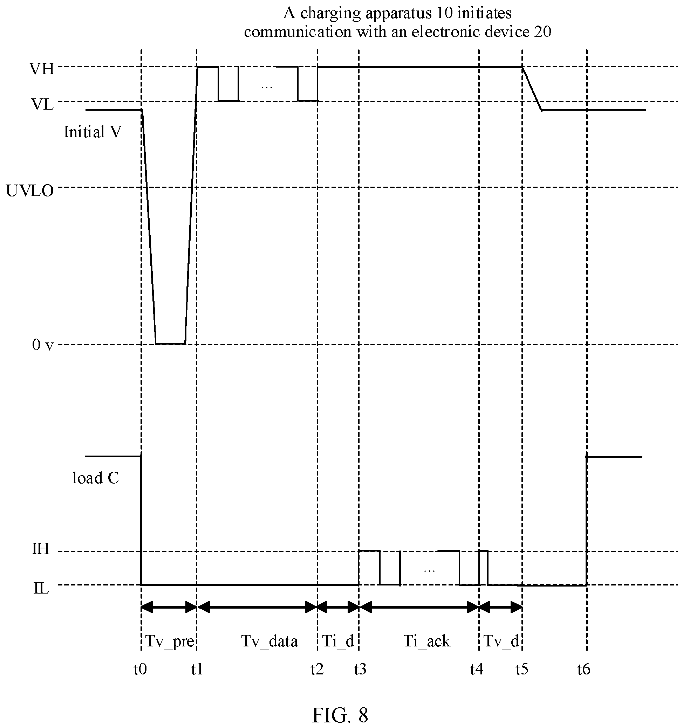

FIG. 8 is a diagram 2 of a waveform of a modulation signal according to an embodiment of this application.

Herein, load C in FIG. 8 corresponds to an input current of the electronic device 20. After the charging terminal is connected to the power receiving terminal, load C is an output current of the charging apparatus 10.

Initial V in FIG. 8 corresponds to an input voltage of the electronic device 20. After the charging terminal is connected to the power receiving terminal, Initial V is an output voltage of the charging apparatus 10.

When the charging apparatus 10 needs to initiate the communication with the electronic device 20, the first charging circuit 104 sends a second modulation signal to the electronic device 20, where the second modulation signal is a voltage modulation signal.

Specifically, the first modem circuit 1042 of the first charging circuit 104 first modulates an output voltage of the first charging circuit in a time period from t0 to t1, so that an output voltage waveform is temporarily pulled down to a first voltage, where the first voltage is a low voltage value. In other words, in this way, the second modulation signal carries the first voltage.

The first voltage is used to cause the electronic device 20 in a downstream connection to generate a weak backfeed current or under voltage. In this case, a first protection circuit in the second charging circuit 202 controls the second charging circuit 202 to be disconnected from the second battery 203, and also controls Q1 in FIG. 6 to be turned off, or may control both Q1 and Q2 to be turned off, to implement under voltage protection.

Because the second charging circuit 202 of the electronic device 20 is disconnected from the second battery 203, the second battery 203 is prevented from clamping a voltage and a current that are output by the charging terminal.

The first voltage carried in the second modulation signal is less than a first trigger voltage of the first protection circuit. A specific value of the first voltage is not limited in embodiments of this application.

In a typical implementation, the first voltage may be set to 0. UVLO in FIG. 8 represents the first trigger voltage, and the first voltage is located in the time period from t0 to t1 in FIG. 8, namely, a Tv_pre phase of the second modulation signal. The first voltage is located at a head position of the second modulation signal, so that when the second charging circuit 202 of the electronic device 20 receives the second modulation signal, the second charging circuit 202 first receives the first voltage, and further controls the second charging circuit 202 to be disconnected from the second battery 203 in time.

The first modem circuit 1042 modulates a standard communication waveform in a time period from t1 to t2 in FIG. 8, that is, modulates an output voltage of the first charging circuit 104, to form a Tv_data phase of the second modulation signal.

A specific waveform of the Tv_data phase of the second modulation signal is related to the communication protocol predetermined by the charging apparatus 10 and the electronic device 20. This is not specifically limited in embodiments of this application.

The first charging circuit 104 sends the second modulation signal to the electronic device 20 through the charging terminal.

When receiving the second modulation signal, the second charging circuit 202 of the electronic device 20 first receives the first voltage, and then is disconnected from the second battery 203 in time. Then, the second modem circuit 2022 of the second charging circuit 202 demodulates the Tv_data phase of the second modulation signal.

The second charging circuit 202 controls, based on a demodulation result and the predetermined communication protocol, the second modem circuit 2022 to generate a second modulation acknowledgement signal, where the second modulation acknowledgement signal is a current modulation signal, and corresponds to a Ti_dack phase of load C in a time period from t3 to t4 in FIG. 8.

The second charging circuit 202 replies with the second modulation acknowledgement signal to the charging apparatus 10 through the power receiving terminal.

In other words, the communication initiated by the charging apparatus 10 with the electronic device 20 is implemented.

In an implementation corresponding to FIG. 8, the first modem circuit 1042 modulates an output waveform of the first charging circuit 104, so that a backfeed current or an under voltage occurs in the second charging circuit 202, to trigger a protection action of the first protection circuit, and disconnect a charging link of the second battery 203. In this way, time-based integration of charging and communication is implemented.

The following describes another first manner in which the charging apparatus 10 initiates communication with the electronic device 20.

In this implementation, the second charging circuit includes a second protection circuit, and the second protection circuit is configured to: when a charging voltage output by the second charging circuit 202 to the second battery 203 is greater than or equal to a second trigger voltage, control the second charging circuit to be disconnected from the second battery, and also control Q1 in the figure to be turned off, or control both Q1 and Q2 to be turned off. In this case, the second protection circuit can cut off a line connected to the second battery 203 when an over voltage or an over current occurs in the second charging circuit 202. In other words, the first protection circuit in this case is equivalent to an over voltage protection circuit.

The first modem circuit 1042 modulates the output waveform of the first charging circuit 104, so that the second charging circuit 202 experiences an over voltage, to trigger a protection action of the second protection circuit, and disconnect the charging line of the second battery 203. Details are described below.

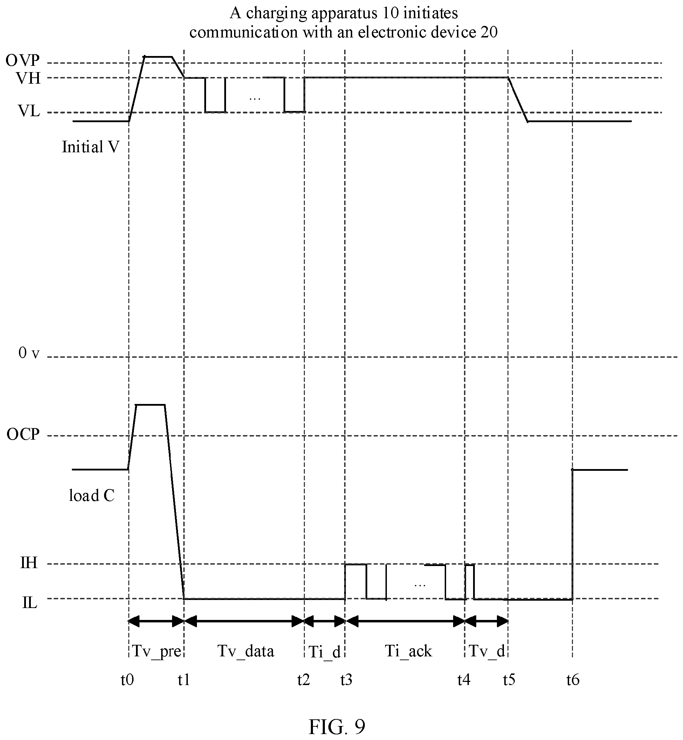

FIG. 9 is a diagram 3 of a waveform of a modulation signal according to an embodiment of this application.

Herein, load C in FIG. 9 corresponds to an input current of the electronic device 20. After the charging terminal is connected to the power receiving terminal, load C is an output current of the charging apparatus 10.

Initial V in FIG. 9 corresponds to an input voltage of the electronic device 20. After the charging terminal is connected to the power receiving terminal, Initial V is an output voltage of the charging apparatus 10.

When the charging apparatus 10 needs to initiate the communication with the electronic device 20, the first charging circuit 104 sends a second modulation signal to the electronic device 20, where the second modulation signal is a voltage modulation signal.

Specifically, the first modem circuit 1042 of the first charging circuit 104 first modulates an output voltage of the first charging circuit in a time period from t0 to t1, so that an output voltage waveform is temporarily pulled up to a first voltage, where the first voltage is greater than a second trigger voltage. In FIG. 9, the second trigger voltage is OVP. In other words, in this way, the second modulation signal carries the first voltage. A specific value of the first voltage is not limited in embodiments of this application, provided that the first voltage is slightly greater than the second trigger voltage in actual application.

The electronic device 20 first receives the first voltage. Because the first voltage is slightly greater than the second trigger voltage, a weak over voltage or over current occurs. In this case, the second protection circuit in the second charging circuit 202 controls the second charging circuit 202 to be disconnected from the second battery 203, and also controls Q1 in FIG. 6 to be turned off, or may control both Q1 and Q2 to be turned off.

Because the second charging circuit 202 of the electronic device 20 is disconnected from the second battery 203, the second battery 203 is prevented from clamping a voltage and a current that are output by the charging terminal.

The first voltage is located in the time period from t0 to t1 in FIG. 9, namely, a Tv_pre phase of the second modulation signal. The first voltage is located at a head position of the second modulation signal, so that when the second charging circuit 202 of the electronic device 20 receives the second modulation signal, the second charging circuit 202 first receives the first voltage, and further controls the second charging circuit 202 to be disconnected from the second battery 203 in time.

The first modem circuit 1042 then modulates a standard communication waveform in a time period from t1 to t2 in FIG. 9, that is, modulates an output voltage of the first charging circuit 104, to form a Tv_data phase of the second modulation signal.

The first charging circuit 104 sends the second modulation signal to the electronic device 20 through the charging terminal. When receiving the second modulation signal, the second charging circuit 202 of the electronic device 20 first receives the first voltage, and then is disconnected from the second battery 203 in time. Then, the second modem circuit 2022 of the second charging circuit 202 demodulates the Tv_data phase of the second modulation signal.

The second charging circuit 202 controls, based on a demodulation result and the predetermined communication protocol, the second modem circuit 2022 to generate a second modulation acknowledgement signal, where the second modulation acknowledgement signal is a current modulation signal, and corresponds to a Ti_dack phase of load C in a time period from t3 to t4 in FIG. 9.

The second charging circuit 202 replies with the second modulation acknowledgement signal to the charging apparatus 10 through the power receiving terminal.

The Tv_pre phase and the Ti_pre phase in the foregoing waveform diagrams may be used as a part of a waveform of the communication protocol, located at a head of the modulation signal, and used to represent a preparation process before communication. Therefore, bidirectional communication can be implemented during direct charging, a quantity of times that the first charging circuit reports an interrupt to the first controller can be reduced, and a quantity of times that the second charging circuit reports an interrupt to the second controller can be reduced. In other words, an interrupt caused by switching between a charging mode and a communication modulation mode of an electronic device may be considered as a part of the communication protocol. In this way, a communication process is simplified, and practicability is improved.

With reference to an actual scenario, for example, when the electronic device is an earphone, and the charging apparatus is a charging case of the earphone, the earphone is connected to another electronic device in a use process, for example, connected to a mobile phone. In addition, currently, after the earphone is connected to the mobile phone for the first time, the earphone can be automatically connected to the mobile phone when the earphone is powered on again, so as to wait for the mobile phone to send data and enter a playing state. After the earphone is placed in the charging case, the earphone is disconnected from the mobile phone and stop playing during charging. If the charging process of the earphone is interrupted, the earphone may be automatically connected to the mobile phone again. However, in the solutions provided in embodiments of this application, the interrupt caused by switching between the charging mode and the communication modulation mode of the electronic device is considered as a part of the communication protocol. In this case, the earphone is connected to the mobile phone without determining whether charging is interrupted. This improves practicability.

In FIG. 6 to FIG. 9, an example in which the charging apparatus 10 performs direct charging on the electronic device 20 is used for description. In some other embodiments, the charging apparatus supports both direct charging and voltage doubling charging of the electronic device. The following provides specific descriptions with reference to the accompanying drawings.

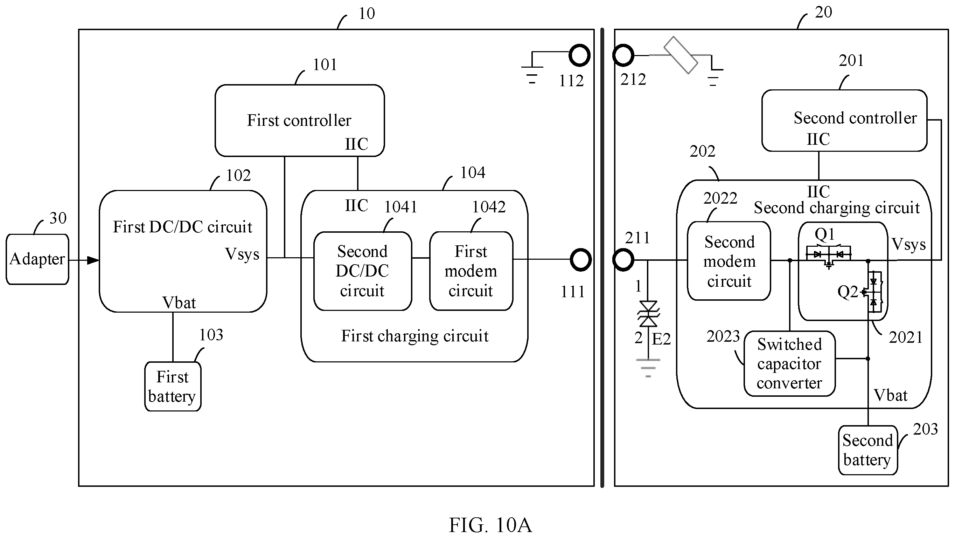

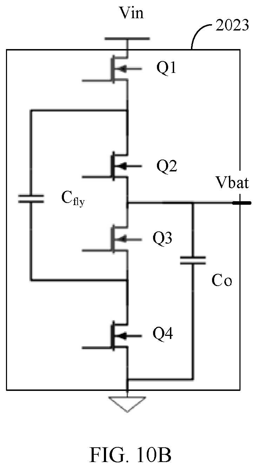

Refer to FIG. 10A and FIG. 10B together. FIG. 10A is another diagram of a charging apparatus and an electronic device according to an embodiment of this application. FIG. 10B is a circuit diagram of a switched capacitor converter 2023 according to an embodiment of this application.

A difference between an electronic device 20 shown in FIG. 10A and the electronic device 20 shown in FIG. 6 lies in that a second charging circuit 202 further includes a switched capacitor converter 2023.

In this case, a direct charging circuit 2021 of the second charging circuit 202 includes Q1 and Q2, and a voltage doubling charging circuit of the second charging circuit 202 includes the switched capacitor converter 2023.

In addition, a first terminal of the switched capacitor converter 2023 is connected to a first terminal of Q1, and a second terminal of the switched capacitor converter 2023 is connected to an output terminal of the second charging circuit 202.

In a process in which a charging apparatus 10 charges the electronic device 20, the switched capacitor converter 2023 may boost a voltage input to the switched capacitor converter 2023 and then output the voltage, so that the voltage can be regulated, and a charging voltage for a second battery 203 can be increased. In this way, efficiency of charging the second battery 203 can be improved.

The switched capacitor converter 2023 shown in FIG. 10B is merely a possible implementation, and does not constitute a limitation on the technical solutions of this application. The switched capacitor converter 2023 may alternatively be another implementation.

To facilitate a person skilled in the art to understand a charging process of an electronic device more clearly, the following first describes each charging phase in the charging process.

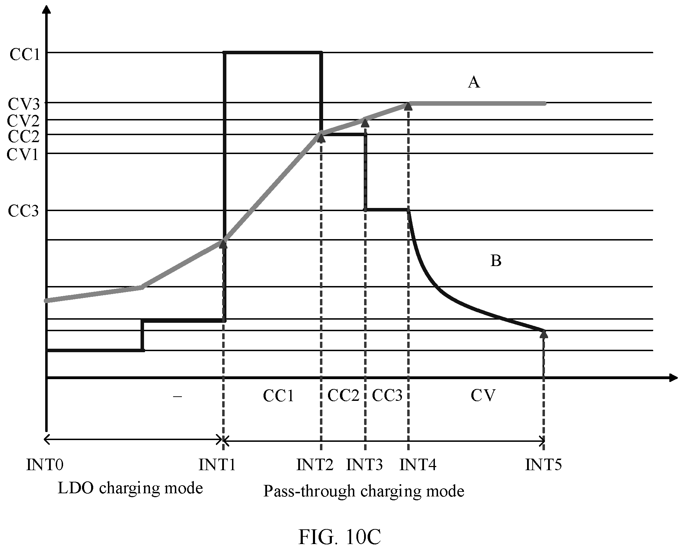

FIG. 10C is a diagram of a charging phase according to an embodiment of this application.

A phase in which the charging apparatus 10 charges the electronic device 20 may be divided into a trickle charging phase, a constant current charging phase, a constant voltage charging phase, and a charging termination phase.

In the trickle charging phase, the electronic device uses an LDO (Low Dropout Regulator, low dropout linear voltage regulator) charging mode, corresponding to INT0 to INT1 in the figure. In the constant current charging phase and the constant voltage charging phase, the electronic device uses a pass-through charging mode.

This embodiment does not specifically limit a quantity of phases of the constant current charging phase. The constant current charging phase may be divided into a plurality of phases, for example, CC1 phase (corresponding to INT1 to INT2 in the figure), CC2 phase (corresponding to INT2 to INT3 in the figure), and CC3 phase (corresponding to INT3 to INT4 in the figure). In the figure, CV indicates the constant voltage charging phase, corresponding to INT4 to INT5 in the figure. Herein, CV1, CV2, and CV3 indicate voltage thresholds for distinguishing the CC1 phase, the CC2 phase, and the CC3 phase during the constant current charging phase.

In the trickle charging phase, the second battery 203 is charged in the LDO charging mode shown in the figure. When a voltage of the second battery 203 reaches a pre-charging threshold, the second charging circuit in the electronic device 20 actively generates an interrupt through an I/O interface, so that the electronic device 20 communicates with the charging apparatus 10 to transfer a first charging parameter of the second battery 203, and the charging apparatus 10 charges the electronic device 20 based on the first charging parameter of the second battery 203. When the voltage of the second battery is less than the pre-charging threshold, a charging phase corresponding to the second battery is the trickle charging phase. Therefore, only a small amount of communication is required between the electronic device and the charging apparatus to complete the entire charging process.

In the figure, a curve A represents the voltage of the second battery, and a curve B represents a charging current of the second battery.

When the second battery 203 has different voltages, the second battery is in different charging phases. Therefore, the charging phase of the second battery may be determined based on voltage information of the second battery 203.

A second controller 201 in the electronic device 20 can obtain the voltage information of the second battery, and determine the charging phase of the second battery based on the voltage information of the second battery.

The following separately describes in detail the trickle charging phase, the constant current charging phase, the constant voltage charging phase, and the charging termination phase.

It can be learned from FIG. 10C that, when the voltage of the second battery 203 of the electronic device 20 is less than the pre-charging threshold, the charging apparatus can determine that the charging phase of the second battery is the trickle charging phase during charging of the electronic device.

The pre-charging threshold is not limited in this application. The pre-charging threshold may be 2.8 V or 3 V. A person skilled in the art may select an appropriate pre-charging threshold based on an actual requirement.

In the trickle charging phase, the charging apparatus 10 outputs a small voltage to the electronic device 20, to maintain the second controller 201 of the electronic device 20 to work.

In the trickle charging phase, as charging time increases, power of the second battery 203 increases, and further, a voltage of the second battery 203 also increases. The second controller 201 can detect the voltage of the second battery 203 in real time or in a preset cycle. When the second controller 201 detects that the voltage of the second battery 203 is greater than or equal to the pre-charging threshold, the charging phase changes from the trickle charging phase to the constant current charging phase.

The second controller 201 can detect the voltage information of the second battery, and perform an active interrupt, so that the charging apparatus 10 establishes a communication connection with the electronic device 20, and then adjusts a charging voltage and a charging current through communication with a first controller 101.

In the constant current charging phase, in some embodiments, the second controller 201 can transfer information to the second charging circuit 202 through an IIC interface, so that the second charging circuit 202 controls a second modem circuit 2022 to send a modulation signal to the charging apparatus 10. A first charging circuit 104 controls a first modem circuit 1042 to demodulate the received modulation signal, and sends a generated demodulation result to the first controller 101, to inform the first controller 101 to prepare to communicate with the second controller 201. This process corresponds to the foregoing descriptions in FIG. 6 to FIG. 9.

When the charging apparatus 10 supports only direct charging of the electronic device 20, that is, includes only a direct charging circuit 2021, and does not include the switched capacitor converter 2023, the charging apparatus 10 directly charges the second battery 203 by using the charging voltage and the charging current that are output by a first charging terminal 111.

When the charging apparatus 10 supports both direct charging and voltage doubling charging of the electronic device 20, that is, when the switched capacitor converter 2023 is included, Q1 is turned off in the constant voltage charging phase or the constant current charging phase, so that electric energy is used to directly charge the second battery 203 through the switched capacitor converter 2023. The second battery 203 can supply power to the second controller 201 through Q2.

In another charging phase, for example, in the trickle charging phase or the pre-charging phase, Q1 is turned on, and a current passes through Q1 and Q2 to charge the second battery 6024.

Impedance of the direct charging circuit 2021 is adjustable, so that impedance of a charging path can be controlled in different charging phases.

The second controller 201 can obtain a corresponding charging phase based on the voltage information of the second battery 203. When the charging phase is the constant current charging phase or the constant voltage charging phase, the second controller 201 controls Q1 to be turned off and Q2 to be turned on, and controls the switched capacitor converter 807 to work in a pass-through state, so that the charging path works in the pass-through state. When the charging phase is the trickle charging phase, Q1 and Q2 are controlled to be turned on. In other words, the second controller 201 controls the switched capacitor converter 2023 and the direct charging circuit 2021 to work in different states in different charging phases. Therefore, charging efficiency of the second battery 203 in the constant voltage charging phase and the constant current charging phase can be improved, and charging efficiency of the second battery 203 in the charging phase can also be improved.

The switched capacitor converter 2023 can enable a voltage output by the first charging terminal 111 to have a preset multiple relationship with a charging voltage output by the second charging circuit 202 to the second battery 203. The preset multiple relationship may be 2:1, 3:1, 4:1, or the like. This is not specifically limited in embodiments of this application. The preset multiple depends on a parameter of the switched capacitor converter 2023.

In FIG. 6 to FIG. 9, a ratio of the voltage output by the first charging terminal 111 to the charging voltage of the second battery 203 is 1:1. In an implementation provided in embodiments of this application, a power loss in a line can be reduced by boosting the voltage output by the first charging terminal 111. In this way, charging efficiency of the second battery 203 is improved.

When the charging apparatus 10 performs voltage doubling charging on the electronic device 20, a current and a voltage on the charging line are also clamped by the second battery 203. This affects communication. Therefore, in a process in which the charging apparatus 10 communicates with the electronic device 20, the switched capacitor converter 2023 also needs to be controlled to stop charging the second battery 203.

In this case, when the electronic device 20 initiates communication, the electronic device 20 controls the switched capacitor converter 203 to stop charging the second battery 203, and then implements the communication with reference to the descriptions corresponding to FIG. 7. For an implementation in which the charging apparatus 10 initiates communication, refer to the descriptions corresponding to FIG. 8, where a protection action of an under voltage protection circuit is triggered by an under voltage; or refer to the descriptions corresponding to FIG. 9, where a protection action of an over voltage protection circuit is triggered by an over voltage. A subsequent specific communication process is similar. Details are not described again in embodiments of this application.

In conclusion, according to the solutions provided in embodiments of this application, when the charging apparatus supports both direct charging and voltage doubling charging of the electronic device, bidirectional communication between the charging apparatus and the electronic device can be implemented, a quantity of times that the first charging circuit reports an interrupt to the first controller can be reduced, and a quantity of times that the second charging circuit reports an interrupt to the second controller can be reduced. In other words, an interrupt caused by switching between a charging mode and a communication modulation mode of the electronic device may be considered as a part of the communication protocol, and does not need to be reported to a protection terminal. In this way, a communication process is simplified, and practicability is improved.

In the foregoing embodiments of this application, the electronic device and the charging apparatus implement communication based on a modulation signal. In actual application, in addition to the function of informing the first controller that the first controller needs to communicate with the second controller in the foregoing descriptions, the communication can be further used to determine whether the electronic device is connected to the charging apparatus, and perform identity identification on the electronic device or the charging apparatus, that is, determine whether the electronic device matches the charging apparatus.

The following continues to use an example in which the electronic device is an earphone and the charging apparatus is a charging case of the earphone, to describe a specific process of implementing detection of an in/out state of the earphone and identity identification based on a modulation signal.

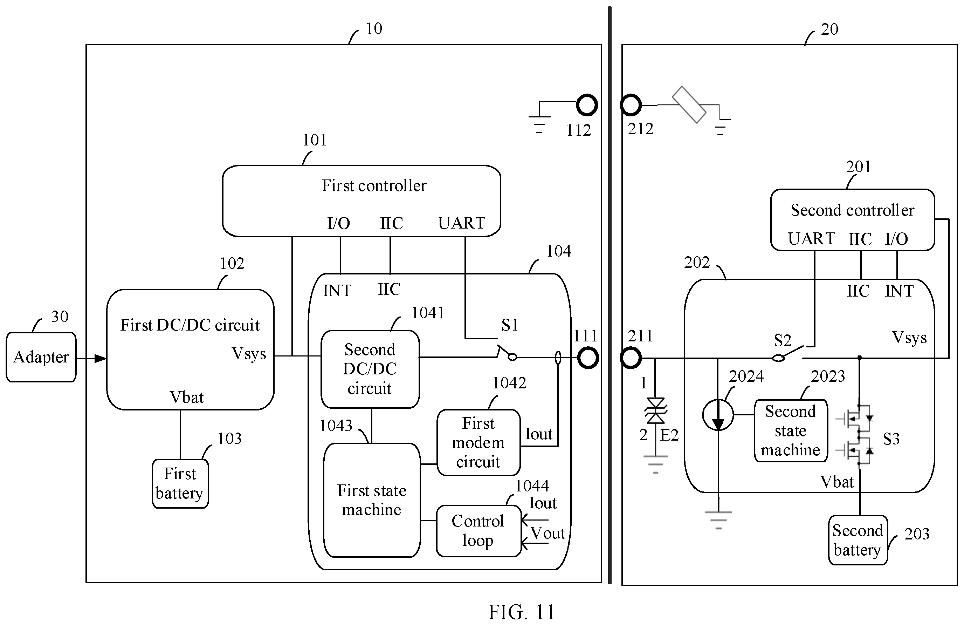

FIG. 11 is another diagram of a charging apparatus and an electronic device according to an embodiment of this application.

As shown in the figure, a charging apparatus 10 is an earphone charging case, and an electronic device 20 is an earphone.

The charging apparatus 10 includes a first controller 101, a first DC/DC circuit 102, a first charging circuit 104, and a charging terminal. The charging terminal includes a first charging terminal 111 and a second charging terminal 112.

The first charging circuit 104 includes a second DC/DC circuit 1041, a first switch module S1, a first modem circuit 1042, a first state machine 1043, and a control loop 1044.

The electronic device 20 includes a second controller 201, a second charging circuit 202, a second battery 203, and a power receiving terminal. The power receiving terminal includes a first power receiving terminal 211 and a second power receiving terminal 212.

The second charging circuit 202 includes a second modem circuit 2022, a second switch module S2, a third switch module S3, and a modem current source 2024.

The first modem circuit 1042 is connected to the first state machine 1043.

The second state machine 2023 is connected to the second modem circuit, that is, the second state machine 2023 is connected to the modem current source 2023.

The charging apparatus 10 is configured to have an output when the charging case is opened. In other words, after the charging case is opened, the second DC/DC circuit 1041 outputs a preset voltage, or outputs a preset voltage in a preset cycle to reduce power consumption. The preset voltage is not specifically limited in embodiments of this application. For example, the preset voltage may be set to 5 V, and the charging apparatus 10 outputs a voltage after the charging apparatus 10 is opened, to wait for the electronic device 20 to be connected.

When the electronic device 20 is in an out state, an input terminal is in a high-impedance state.

After the electronic device 20 is put into the charging apparatus, the power receiving terminal is connected to a charging terminal, and after being in contact with an appropriate input voltage, the electronic device actively sends a handshake signal, namely, a first modulation signal. In this case, the modem current source (modem current source) 2024 in the electronic device 20 generates a current pulse signal to form a feature character string.

The following first describes an implementation of the feature character string.

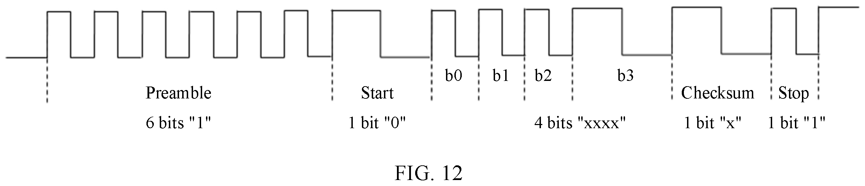

FIG. 12 is a diagram of a feature character string according to an embodiment of this application.

After the electronic device 20 is connected to the charging apparatus through the power receiving terminal, the electronic device 20 detects an appropriate output voltage, and obtains a feature state character string through modulation on a side of the electronic device 20 by changing a current, a voltage, a switching frequency, or the like based on a communication protocol of the electronic device 20 and the charging apparatus 10.

The feature character string includes a preamble (Preamble), a start code (Start), a data code (b0 to b3), a checksum (checksum), and a stop code (Stop).

As shown in the figure, the preamble includes 6 bits (bit) "1", the start code includes 1 bit "1", and the data code carries specific communication information, which is related to a communication protocol predetermined by the electronic device 20 and the charging apparatus 10.

The checksum is used to check a sum of data code and is usually used to ensure integrity and accuracy of data during communication.

The stop code represents an end bit of the feature character string.

The foregoing feature character string is merely a possible implementation. The feature character string may alternatively be implemented in another manner. For example, the preamble may not be 6 bits, but may be set to 5 bits, 7 bits, or the like.

In other words, the foregoing modem current source 2024 forms the Ti_data phase in the first modulation signal shown in FIG. 7.

After controlling the modem current source 2024 to modulate an input current of the second charging circuit 202, the second state machine 2023 carries a generated feature character string to the first modulation signal, and sends a generated first modulation signal to the charging apparatus. Specifically, the feature character string carried in the first modulation signal is a first feature character string based on the communication protocol predetermined by the electronic device and the charging apparatus.

The first modem circuit 1042 of the charging apparatus is configured to demodulate the obtained modulation signal, and send a demodulation result to the first state machine 1043.

After the first modem circuit 1042 successfully performs demodulation, the first state machine 1043 obtains the demodulation result corresponding to the first modulation signal, where the demodulation result carries the first feature character string.

The first state machine 1043 determines whether the first feature character string is a first preset feature character string. If the first feature character string is the first preset feature character string, it represents that a character string that meets the communication protocol is received in this case, and it is determined that the electronic device 20 is connected in this case.

The first state machine 1043 then controls the first modem circuit 1042 to modulate an output voltage of the first charging circuit 104, to form a first modulation acknowledgement signal, where the first modulation acknowledgement signal carries a second feature character string.

The second modem circuit of the electronic device 20 demodulates the received first modulation acknowledgement signal, and sends a demodulation result to the second state machine 2023.

When the second feature character string included in the demodulation result is a second preset feature character string, the second state machine 2023 determines that the electronic device 20 is connected to the charging apparatus 10.

Specific implementations of the first preset feature character string and the second preset feature character string are determined by the communication protocol of the electronic device 20 and the charging apparatus 10. This is not specifically limited in embodiments of this application.

The foregoing describes a process of implementing in-position detection between the charging apparatus and the electronic device based on a modulation signal. In addition, identity identification may be implemented between the charging apparatus and the electronic device based on the modulation signal. In other words, whether two parties match is identified. Details are described below.

After the first modem circuit 1042 successfully performs demodulation, the first state machine 1043 obtains the demodulation result corresponding to the first modulation signal, where the demodulation result carries the first feature character string.

The first state machine 1043 determines whether the first feature character string is the first preset feature character string. If the first feature character string is the first preset feature character string, it represents that the character string that meets the communication protocol is received in this case, it is determined that the electronic device 20 is connected in this case, and it is determined that the electronic device 20 that sends the first modulation signal matches the charging apparatus. Then, the first state machine 1043 controls the first modem circuit 1042 to modulate the output voltage of the first charging circuit 104, to form the first modulation acknowledgement signal.

When the first state machine 1043 determines that the first feature character string is not the first preset feature character string, or the first modem circuit 1042 fails to demodulate the first modulation signal, it is determined that a result of the identity authentication is that the electronic device does not match the charging apparatus. In this case, the first state machine 1043 controls the first modem circuit 1042 not to modulate the output voltage of the first charging circuit 104, that is, does not send the first modulation acknowledgement signal.

When the second charging circuit 202 on the electronic device side does not receive the first modulation acknowledgement signal, the second charging circuit 202 determines that the electronic device 20 does not match the charging apparatus 10.

In other words, the identity identification between the electronic device 20 and the charging apparatus 10 is implemented.

In conclusion, according to the foregoing communication handshake mechanism, both the electronic device 20 and the charging apparatus 10 can complete identity identification and detection of an in state of the earphone. Then, the charging apparatus 10 charges the electronic device 20. During charging, there are a continuous voltage and a continuous current on a power transmission line between the electronic device 20 and the charging apparatus 10. In actual application, as the charging process proceeds, power of the second battery 203 of the electronic device 20 gradually increases, and a voltage also gradually increases. A charging current and a charging voltage of the second battery 203 further need to be adjusted through communication between the electronic device 20 and the charging apparatus 10. The following specifically describes the implementation process.

Still refer to the diagram of the charging apparatus and the electronic device shown in FIG. 11,

The charging apparatus 10 further includes the first controller 101.

A first communication interface of the first controller 101, namely, an IIC interface of the first controller 101 in FIG. 11, is connected to the first charging circuit 104, and is connected to the first state machine 1043 in the first charging circuit 104.

A second communication interface of the first controller 101, namely, a UART interface of the first controller 101 in FIG. 11, is connected to a second terminal of the first switch module S1, a first terminal of the first switch module S1 is connected to an output terminal of the second DC/DC circuit 1041, and a third terminal of the first switch module S1 is connected to an output terminal of the first charging circuit 104.

The electronic device 20 further includes the second controller 201.

A first communication interface of the second controller 201, namely, an IIC interface of the second controller 201 in FIG. 11, is connected to the second charging circuit 202, and is connected to the second state machine 2023 in the second charging circuit 202.

A second communication interface of the second controller 201, namely, a UART interface of the second controller 201 in FIG. 11, is connected to a second terminal of the second switch module S2, a first terminal of the second switch module S2 is connected to an output terminal of the second charging circuit 202, a third terminal of the second switch module S2 is connected to a first terminal of the third switch module S3, and a second terminal of the third switch module S3 is connected to the second battery 203.

The third switch module S3 includes a first MOS transistor and a second MOS transistor. The first MOS transistor and the second MOS transistor are connected in series, and an anti-parallel diode of the first MOS transistor and an anti-parallel diode of the second MOS transistor are in opposite directions. In this case, states of the first MOS transistor and the second MOS transistor are adjusted, so that impedance of the second switch module S3 can be minimized, so that the charging apparatus 10 performs direct charging on the second battery 203 of the electronic device 20 by using a charging voltage and a charging current that are output by the charging terminal 111.

When determining, according to the handshake mechanism in the foregoing embodiments, that the electronic device 20 is in position, the first state machine 1043 sends a first interrupt signal to the first communication interface of the first controller 101, where the first interrupt signal indicates to the first controller 101 that the electronic device 20 is currently in position.

The first state machine 1043 is further configured to: when the first controller 101 needs to communicate with the second controller 201 of the electronic device 20, control the second terminal of the first switch module S1 to be connected to the third terminal of the first switch module S1, so that the UART interface of the first controller 101 is connected to the circuit. In this case, the output terminal of the second DC/DC circuit 1041 is not connected to the charging terminal. In other words, the charging apparatus 10 temporarily stops charging the electronic device 20.

When determining, according to the handshake mechanism in the foregoing embodiments, that the electronic device 20 is connected to the charging apparatus 10, the second state machine 2023 of the first controller 101 sends a third interrupt signal to the UART interface of the second controller 201, where the third interrupt signal indicates that the electronic device is connected to the charging apparatus.

When the second controller 201 communicates with the charging apparatus 10, the second state machine 2023 controls the first terminal of the second switch module S2 to be connected to the second terminal of the second switch module S2.

In this case, the first controller 101 is connected to the second controller 201, to implement data exchange in the charging process.

In a possible implementation, after the first controller 101 is connected to the second controller 201, the second controller 201 sends a first charging parameter to the first controller 101, where the first charging parameter includes a charging voltage and a charging current that correspond to the second battery 203. The first controller 101 receives the first charging parameter sent by the second controller 201, and sends the first charging parameter to the first state machine 1043, so that the first state machine 1043 controls the second DC/DC circuit 1041 based on the first charging parameter.

In another possible implementation, after the first controller 101 is connected to the second controller 201, the second controller 201 sends voltage information of the second battery 203 to the first controller 101. After receiving the voltage information of the second battery 203 sent by the second controller 201, the first controller 101 determines, based on the voltage information of the second battery 203, a first charging parameter corresponding to the second battery 203, where the first charging parameter includes a charging voltage and a charging current that correspond to the second battery; and sends the first charging parameter to the first state machine, so that the first state machine 1043 controls the second DC/DC circuit 1041 based on the first charging parameter.

A correspondence between the voltage information of the second battery 203 and the first charging parameter may be calibrated in advance for storage, for example, may be stored in a form of a data table, and is to be invoked by the first controller 101 when being used.

After communication between the first controller 101 and the second controller 201 ends, the first state machine 1043 controls the first terminal of the first switch module S1 to be connected to the third terminal of the first switch module, so that the second DC/DC circuit 1041 is connected to the charging terminal. In addition, the second state machine 2023 controls the first terminal of the second switch module S2 to be connected to the third terminal of the second switch module S2, so that the second charging circuit 202 charges the second battery 203.

In this case, the first charging parameter is obtained through the foregoing communication. The control loop 1044 is disposed in the first charging circuit 104, the control loop 1044 includes a voltage loop and a current loop, and an input of the control loop 1044 includes Iou and Vout. Iout is a detected output current of the charging terminal, and Vout is a detected output voltage of the charging terminal. Vout is compared with the charging voltage in the first charging parameter, and an output voltage of the charging terminal is controlled to be consistent with the charging voltage based on a voltage comparison result, so as to implement closed-loop control of the voltage loop. Iout is compared with the charging current in the first charging parameter, and an output current is controlled to be consistent with the charging current based on a current comparison result, so as to implement closed-loop control of the current loop.

The foregoing communication between the first controller 101 and the second controller 201 may occur a plurality of times in the entire charging process. A quantity of communication times is not specifically limited in embodiments of this application.

In the foregoing descriptions, direct charging of the electronic device is used as an example. When voltage doubling charging is performed on the electronic device, refer to the circuit corresponding to FIG. 10A. However, a process of communication between the first controller 101 and the second controller 201 is similar to that in the foregoing descriptions. Details are not described herein again.

In conclusion, according to the foregoing solutions provided in embodiments of this application, in the charging process, the charging apparatus can implement bidirectional communication with the electronic device, and the charging apparatus is supported in performing direct charging or voltage doubling charging on the electronic device. This improves charging efficiency of the electronic device.

The foregoing descriptions mainly describe a communication manner in the charging process. The following specifically describes a manner of detecting that the charging apparatus is separated from the electronic device.

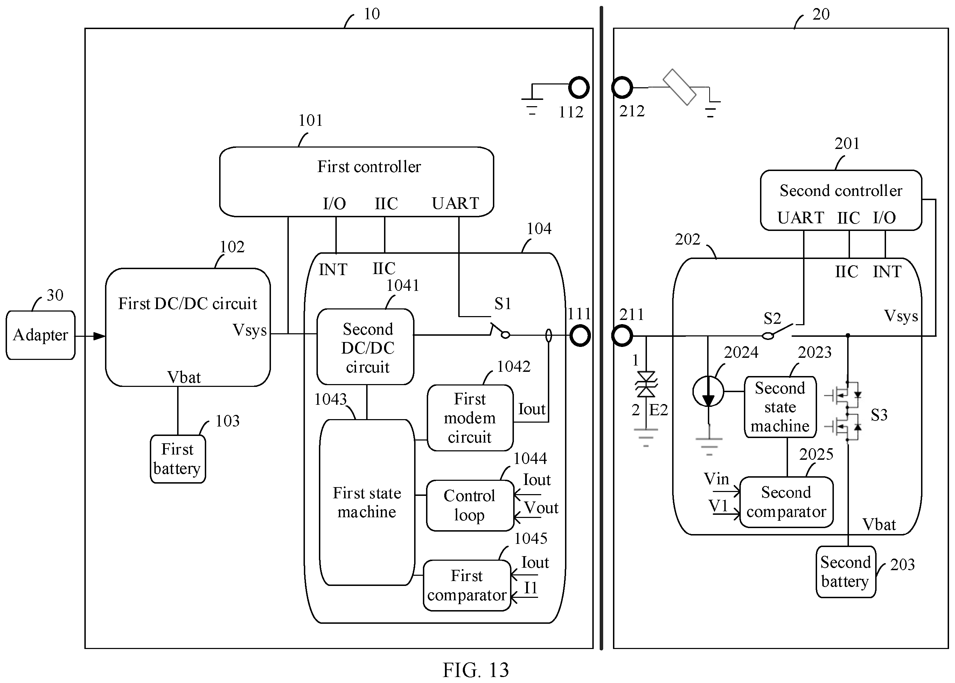

FIG. 13 is another diagram of a charging apparatus and an electronic device according to an embodiment of this application.

A difference between this embodiment of this application and the implementation shown in FIG. 11 lies in that a charging apparatus 10 further includes a first comparator 1045, and an electronic device 20 further includes a second comparator 2025.

The first comparator 1045 in FIG. 11 is integrated with the first charging circuit 104. In some other embodiments, the first comparator 1045 may also be disposed independently.

The first comparator 1045 is configured to compare an output current Iout of the charging apparatus 10 with a preset current I1, and send an obtained first comparison result to a first state machine 1043.

When determining, based on the first comparison result, that the output current Iout of the charging apparatus 10 is less than the preset current I1, the first state machine 1043 sends a second interrupt signal to an IIC interface of a first controller 101, where the second interrupt signal indicates to the first controller 101 that the electronic device 20 is disconnected from the charging apparatus 10.

In some embodiments, after receiving the second interrupt signal, the first controller 101 determines that the electronic device 20 is disconnected, and may control a first DC/DC circuit 102 and/or a second DC/DC circuit 1041 to stop working.

The second comparator 2025 in FIG. 11 is integrated with the second charging circuit 202. In some other embodiments, the second comparator 2025 may also be disposed independently.

The second comparator 2025 is configured to compare an input voltage Vin of the electronic device with a preset voltage V1, and send an obtained second comparison result to a second state machine 2023.

When determining, based on the second comparison result, that the input voltage Vin is less than the preset voltage V1, the second comparator 2025 sends a fourth interrupt signal to an IIC interface of a second controller 201, where the fourth interrupt signal indicates to the second controller 201 that the electronic device 20 is disconnected from the charging apparatus 10.

In conclusion, whether the electronic device is disconnected from the charging apparatus is detected in the foregoing manners. However, in actual application, the following special cases may exist.

Case 1: The second battery 203 of the electronic device 20 is fully charged, but the electronic device 20 is still connected to the charging apparatus. In this case, an input voltage of the electronic device 20 is low, and an output current of the charging apparatus 10 is low.

Case 2: Before the electronic device 20 is charged, the second battery 203 is overdischarged. To protect the second battery 203, trickle charging needs to be first performed on the second battery 203 for a period of time. During trickle charging, an input voltage of the electronic device 20 is low, and an output current of the charging apparatus 10 is low.

For the foregoing cases, the first comparator 1045 may not detect the output current Iout. Therefore, the charging apparatus may mistakenly determine that the electronic device 20 is out of the charging apparatus, and may stop charging the electronic device 20.

Therefore, to make detection logic more complete and avoid a mistakenly determining of the charging apparatus, a heartbeat pulse signal may be sent by using a modem current source of the second charging circuit 202. Details are described below.

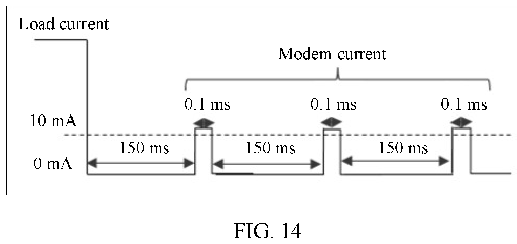

FIG. 14 is a diagram 4 of a waveform of a modulation signal according to an embodiment of this application.

When the battery 2023 is in a trickle charging state or a fully-charged state, the second state machine 2023 of the electronic device 20 controls a second modem circuit to modulate an input current of the second charging circuit, so that a modulated current includes a preset pulse signal, and send the preset pulse signal to the charging apparatus 10.

The preset pulse signal shown in FIG. 14 is merely a possible implementation, and does not constitute a specific limitation on this embodiment. The preset pulse signal is specifically determined by a communication protocol of the charging apparatus 10 and the electronic device 20. Refer to FIG. 14. In other words, the electronic device 20 sends a pulse that lasts for 0.1 ms to the charging apparatus 10 every 150 ms, to inform the charging apparatus 10 that the electronic device 20 is still in position in this case.

A first modem circuit 1042 of the charging apparatus 10 demodulates a received modulation signal, and sends a demodulation result to the first state machine 1043. When determining that the electronic device 20 sends the preset pulse signal to the charging apparatus 10, the first state machine 1043 determines that the electronic device 20 is normally connected to the charging apparatus.

Further, when determining that the electronic device 20 sends the preset pulse signal to the charging apparatus 10, the first state machine 1043 maintains a current working state of the second DC/DC circuit, and sends a fifth interrupt signal to the first controller 101, where the fifth interrupt signal indicates to the first controller 101 that the electronic device 20 is currently in a trickle charging state.

In some other embodiments, the electronic device in the fully-charged charging state or the trickle charging state may respectively correspond to different preset pulse signals, so that the first state machine 1043 determines a current specific state of the electronic device.

In conclusion, in the foregoing embodiments, the modem current source 2024 of the second charging circuit 202 is used to send the heartbeat pulse signal to the charging apparatus, so that when the second battery 203 is fully charged or trickle charging is performed on the second battery 203, the charging apparatus 10 is prevented from mistakenly determining that the electronic device is disconnected.

In some other extreme scenarios in actual application, the input voltage of the electronic device 20 is zero because the charging apparatus 10 is suddenly powered off due to an over current, an overtemperature, or another reason. Therefore, the electronic device 20 may mistakenly determine that the electronic device is out of the charging apparatus. That the electronic device is an earphone is used as an example. After the earphone mistakenly determines that the earphone is out of the charging apparatus, the earphone may automatically initiate a connection to a mobile phone device. If the earphone is successfully connected to the mobile phone device, the earphone may continue to be in a state of waiting for data transmission or playing by the mobile phone, and power may be exhausted again. In addition, after the electronic device 20 mistakenly determines that the electronic device 20 is out of the charging apparatus, if the charging apparatus 10 recovers from an abnormal state like an over current or an overtemperature, because the electronic device 20 mistakenly determines that the electronic device 20 is out of the charging apparatus, and does not send a handshake signal to the charging apparatus, the charging apparatus 10 may not continue to charge the electronic device 20. In this case, the electronic device 20 is not fully charged. This reduces user experience.

To prevent the electronic device 20 from mistakenly determining that the electronic device 20 is out of the charging apparatus in the foregoing cases, detection may still be implemented by using the modem current source of the second charging circuit 202. Details are described below.

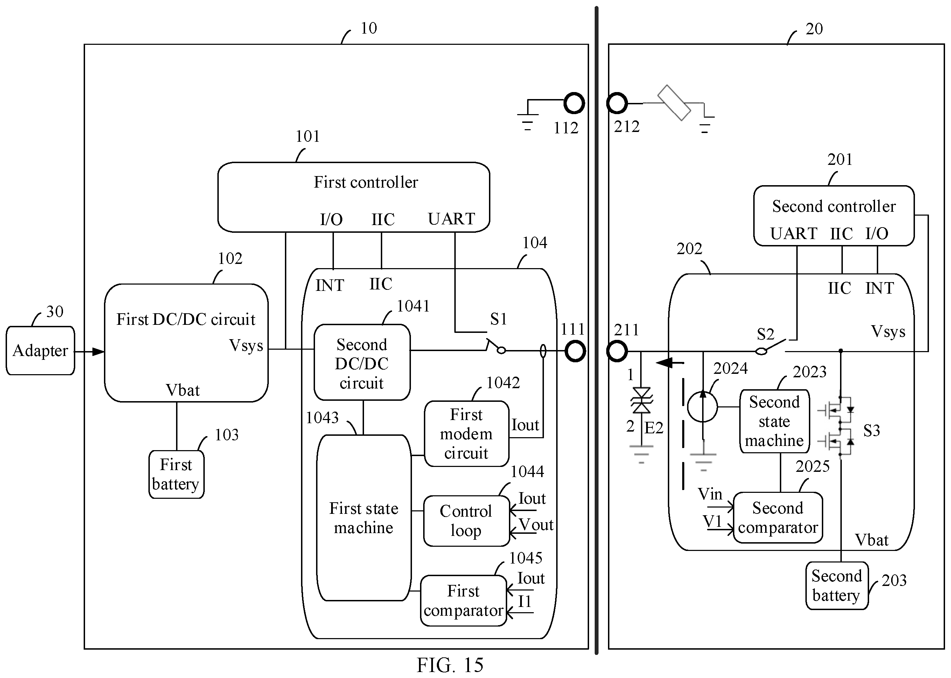

FIG. 15 is another diagram of a charging apparatus and an electronic device according to an embodiment of this application.

A difference between FIG. 15 and FIG. 14 lies in that a modem current source 2024 in FIG. 15 reversely outputs a current to a power receiving terminal 211 of an electronic device 20. In other words, the electronic device 20 backfeeds a current to a charging apparatus 10.

A second comparator 2025 is configured to compare an input voltage Vin of the electronic device with a preset voltage V1, and send an obtained second comparison result to a second state machine 2023.

When determining, based on the second comparison result, that the input voltage Vin is less than the preset voltage V1, the second comparator 2025 controls a second modem circuit to send a detection signal to the power receiving terminal 211, where the detection signal includes a current that is reversely output by the modem current source 2024 to the power receiving terminal 211 of the electronic device 20. In some embodiments, the detection signal may be a constant current signal.

An output terminal of a second DC/DC circuit 1041 of the charging apparatus 10 includes a capacitor, and a characteristic of charging the capacitor is used. Therefore, if the electronic device 20 is further connected to the charging apparatus 10 in this case, a current signal sent by the modem current source 2024 to the electronic device 20 first charges the capacitor, and a voltage of the power receiving terminal does not rise rapidly. If a disconnection actually occurs in this case, the voltage of the power receiving terminal rises rapidly to a voltage of the modem current source 2024.

In other words, when the detection signal is a constant current signal, and the charging case 10 is disconnected from the electronic device 20, the voltage at the first power receiving terminal 211 rises rapidly.

When the voltage of the power receiving terminal exceeds a preset threshold voltage within preset time, the second state machine 2023 sends a fourth interrupt signal to an IIC interface of a second controller 201, where the fourth interrupt signal indicates to the second controller 201 that the electronic device 20 is disconnected from the charging apparatus 10.

The preset time and the preset threshold voltage may be calibrated through a test, to determine appropriate values. This is not specifically limited in embodiments of this application.

In conclusion, according to the solutions provided in embodiments of this application, bidirectional in-position detection can be implemented. In addition, the charging apparatus is prevented from mistakenly determining that the charging apparatus is disconnected from the electronic device, and the electronic device is prevented from mistakenly determining that the electronic device is disconnected from the charging apparatus. This improves reliability and accuracy of in-position detection. In addition, the foregoing implementations have high integration, do not need to rely on components such as a Hall sensor and an infrared light sensor, and further reduces hardware costs.

In the descriptions of the foregoing embodiments, an implementation of implementing bidirectional in-position detection and identity identification based on a modulation signal is described. In addition, in some other implementations, a first modulation signal or a second modulation acknowledgement signal sent by the electronic device to the charging apparatus may also carry a charging parameter of the electronic device, and the charging parameter may include one or more of pieces of information such as a charging current corresponding to the second battery, a charging voltage corresponding to the second battery, or a voltage of the second battery. A second modulation signal and a first modulation acknowledgement signal that are sent by the charging apparatus 10 to the electronic device 20 may further include an output parameter of the charging apparatus 10, for example, an output current or an output voltage. In this manner, data transmitted between the first controller 101 and the second controller 201 through the UART interface may be placed into a modulation signal for transmission. This simplifies a communication process and reduces a quantity of times of reporting an interrupt.

In the foregoing embodiments, an example in which the charging case charges the earphone is used for description. In this case, both the charging terminal and the power receiving terminal include two pins to implement electrical connection, and the charging terminal and the power receiving terminal may be pogo pins or metal domes.

In some other embodiments, the charging terminal and the power receiving terminal may alternatively be connected through a universal serial bus (Universal Serial Bus, USB) port. Details are not described herein again. Further, the solutions of this application may alternatively be applied to another scenario, that is, a scenario in which a smart band or a smart watch is charged. In other words, the electronic device may alternatively be a smart band or a smart watch.

Based on the charging apparatus and the electronic device provided in the foregoing embodiments, an embodiment of this application further provides a charging system, including the charging apparatus and the electronic device in the foregoing embodiments. The following provides specific descriptions with reference to the accompanying drawings.

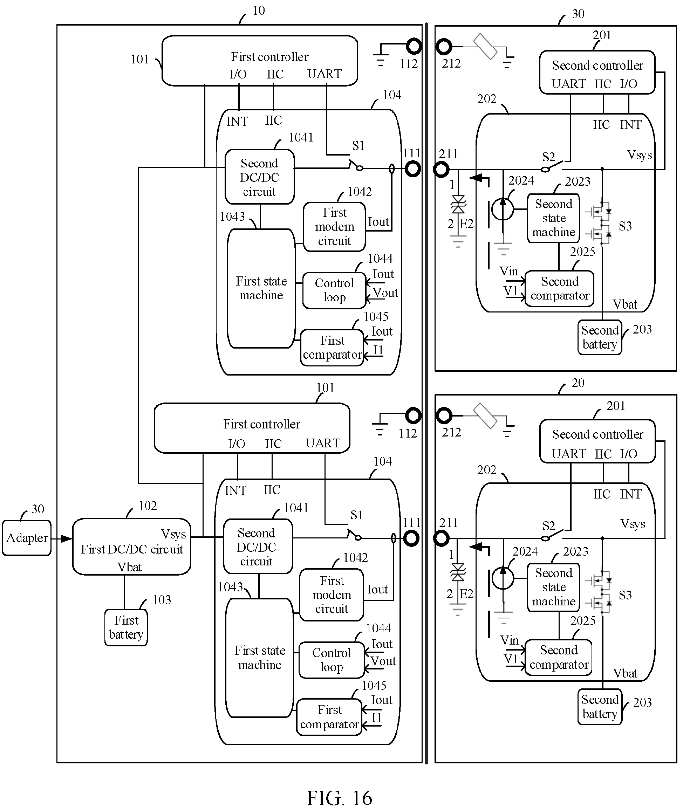

FIG. 16 is another diagram of a charging apparatus and an electronic device according to an embodiment of this application.

A second charging circuit is configured to disconnect the second charging circuit from a second battery, send a first modulation signal to the charging apparatus, receive a first modulation acknowledgement signal sent by the charging apparatus, and demodulate the first modulation acknowledgement signal, where the first modulation signal includes a first current, and the first current is used to identify that the electronic device initiates communication with the charging apparatus; or receive a second modulation signal sent by the charging apparatus, demodulate the second modulation signal, and when a demodulation result of the second modulation signal includes a first voltage, disconnect the second charging circuit from a second battery, and send a second modulation acknowledgement signal to the charging apparatus.

A first charging circuit is configured to receive the first modulation signal sent by the electronic device, demodulate the first modulation signal, and when a demodulation result includes the first current, send the first modulation acknowledgement signal to the electronic device; or send the second modulation signal to the electronic device, receive the second modulation acknowledgement signal sent by the electronic device, and demodulate the second modulation acknowledgement signal, where the second modulation signal includes the first voltage, and the first voltage is used to disconnect the second charging circuit of the electronic device from the second battery.

An earphone charging system including a charging case and an earphone is still used as an example for description. In this case, both a charging terminal and a power receiving terminal include two pins to implement electrical connection. It may be understood that the foregoing descriptions are provided by using an example in which the charging case is used to charge one earphone. In actual application, the charging apparatus can charge two earphones at the same time, that is, charge the electronic device 20 and an electronic device 30. In other words, the charging system includes the charging apparatus 10, the electronic device 20, and the electronic device 30. Implementations of circuits inside the electronic device 20 and the electronic device 30 are the same. Details are not described herein again. In this case, the electronic device 20 is one earphone, and the electronic device 30 is the other earphone.

The charging apparatus may include two same first charging circuits 104, and the two first charging circuits 104 are jointly connected to an output terminal of the first DC/DC circuit 102.

Each first charging circuit 104 corresponds to one first controller 101. Two first controllers 101 in the figure are separately disposed. In some other embodiments, the two first controllers 101 may alternatively be integrated together.

The foregoing earphone charging system is merely a possible implementation, and does not constitute a limitation on the technical solutions of this application. In actual application, the two first charging circuits 104 may alternatively be directly connected to a same first controller 101. In other words, only one first controller is disposed in the charging apparatus 10. Alternatively, two first DC/DC circuits 102 may be disposed in the charging apparatus 10, and each first charging circuit 104 is connected to one corresponding DC/DC circuit 102. In this case, the two first DC/DC circuits 102 may be connected to one first battery 103 together, or may be separately connected to different first batteries 103.

For a specific manner of implementing communication between the charging apparatus 10 and the electronic device 20 and between the charging apparatus 10 and the electronic device 30, refer to descriptions in the foregoing embodiments. Details are not described herein again.

In the foregoing embodiments, the earphone charging system is used as an example for description. The solution provided in this application is applied to another scenario, for example, a scenario in which a smart band or a smart watch is charged. In other words, in this case, the electronic device 20 may be alternatively a smart band or a smart watch. In this case, only one first charging circuit 104 is generally disposed in the charging apparatus 10.

In conclusion, the charging system provided in embodiments of this application is used, so that direct charging or voltage doubling charging can be performed on the electronic device, and bidirectional communication between the electronic device and the charging apparatus is implemented. Bidirectional in-position detection and identity identification can be implemented through the bidirectional communication. In addition, the charging apparatus is prevented from mistakenly determining that the charging apparatus is disconnected from the electronic device, and the electronic device is prevented from mistakenly determining that the electronic device is disconnected from the charging apparatus. This improves reliability and accuracy of in-position detection. In addition, the foregoing implementation may be implemented based on two metal terminals. To be specific, the charging apparatus only needs to include two charging terminals, and the electronic device only needs to include two power receiving terminals. This implementation has high integration, and can implement a detection effect without relying on a component like a Hall sensor or an infrared light sensor, thereby reducing hardware costs.

Based on the charging apparatus and the electronic device provided in the foregoing embodiments, an embodiment of this application further provides a communication method. The following provides specific descriptions with reference to the accompanying drawings.

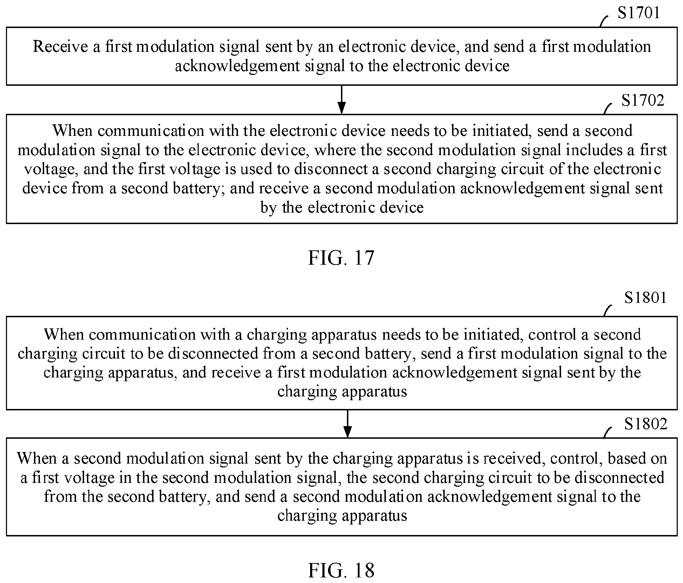

FIG. 17 is a flowchart of a communication method according to an embodiment of this application.

The method is applied to a charging apparatus, and the method includes the following steps.

S1701: Receive a first modulation signal sent by an electronic device, and send a first modulation acknowledgement signal to the electronic device.

S1702: When communication with the electronic device needs to be initiated, send a second modulation signal to the electronic device, where the second modulation signal includes a first voltage, and the first voltage is used to disconnect a second charging circuit of the electronic device from a second battery; and receive a second modulation acknowledgement signal sent by the electronic device.

FIG. 18 is a flowchart of another communication method according to an embodiment of this application.

The method is applied to an electronic device, and the method includes the following steps.

S1801: When communication with a charging apparatus needs to be initiated, control a second charging circuit to be disconnected from a second battery, send a first modulation signal to the charging apparatus, and receive a first modulation acknowledgement signal sent by the charging apparatus.

S1802: When a second modulation signal sent by the charging apparatus is received, control, based on a first voltage in the second modulation signal, the second charging circuit to be disconnected from the second battery, and send a second modulation acknowledgement signal to the charging apparatus.

When the electronic device needs to initiate the communication with the charging apparatus, the second charging circuit first controls the second charging circuit to be disconnected from the second battery, so as to prevent the second battery from clamping a voltage and a current on a line. In this case, the second charging circuit temporarily stops charging the second battery.

The second charging circuit sends the first modulation signal to the charging apparatus through a first power receiving terminal. The first modulation signal includes a first current value, and the first current value indicates to the charging apparatus that the electronic device initiates the communication in this case.

In a communication protocol predetermined by the charging apparatus and the electronic device, it is predetermined that a meaning represented by the first current value is that the electronic device initiates the communication in this case.

After a first charging circuit of the charging apparatus receives the first modulation signal, the charging apparatus obtains the first current, that is, determines that the electronic device initiates the communication. The first charging circuit replies with the first modulation acknowledgement signal to the electronic device through a first charging terminal according to the predetermined communication protocol.

In some embodiments, the first current is located at a head position of the first modulation signal. When the first charging circuit of the charging apparatus receives the second modulation signal, the first charging circuit first receives the first current, and the first charging circuit may determine that the electronic device initiates the communication.

In other words, the communication initiated by the electronic device with the charging apparatus is implemented.

When the charging apparatus needs to initiate the communication with the electronic device, the first charging circuit sends a second modulation signal to the electronic device through the first charging terminal. The second modulation signal includes a first voltage, and the first voltage is used to disconnect the second charging circuit of the electronic device from the second battery, to prevent the second battery from clamping the voltage and the current.

In some embodiments, the first voltage is located at a head position of the second modulation signal. When receiving the second modulation signal, the second charging circuit of the electronic device first receives the first voltage, so that the second charging circuit 202 is disconnected from the second battery in time.

Then, the second charging circuit replies with the second modulation acknowledgement signal to the charging apparatus through a power receiving terminal based on the second modulation signal and the predetermined communication protocol.

The second charging circuit of the electronic device receives the second modulation acknowledgement signal.

In other words, the communication initiated by the charging apparatus with the electronic device is implemented.

It may be understood that division of the foregoing steps in FIG. 17 and FIG. 18 is merely intended for ease of description, and does not constitute a limitation on the technical solutions of this application. In actual application, the charging system may be configured as: the electronic device actively initiates communication with the charging apparatus, or the charging apparatus actively initiates communication with the electronic device. This is not specifically limited in embodiments of this application.

In conclusion, according to the method provided in embodiments of this application, when the charging apparatus performs direct charging or voltage doubling charging on the electronic device, bidirectional communication between the charging apparatus and the electronic device can be implemented. In addition, a communication process is simple and practical. In this communication manner, mutual identity authentication and in-position detection between the electronic device and the charging apparatus can be implemented, and no other detection sensor needs to be additionally disposed. Therefore, hardware costs are further reduced.

The following uses an example in which the electronic device is an earphone and the charging apparatus is a charging case of the earphone to specifically describe how the charging case implements a method for detecting an in state of the earphone. For specific circuit implementation of the charging apparatus and the electronic device, refer to the descriptions in the foregoing embodiments. Details are not described again.

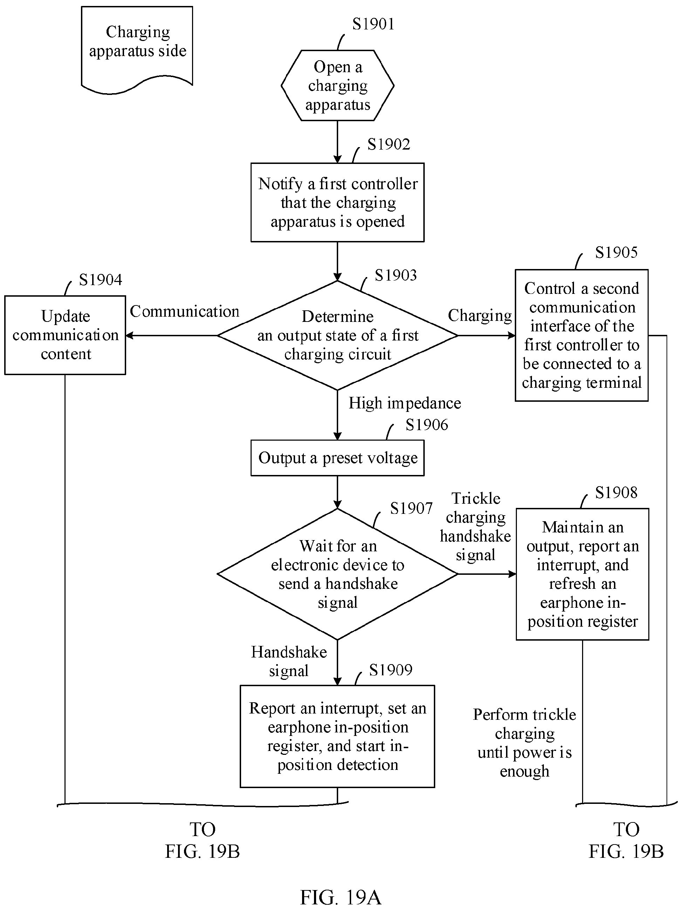

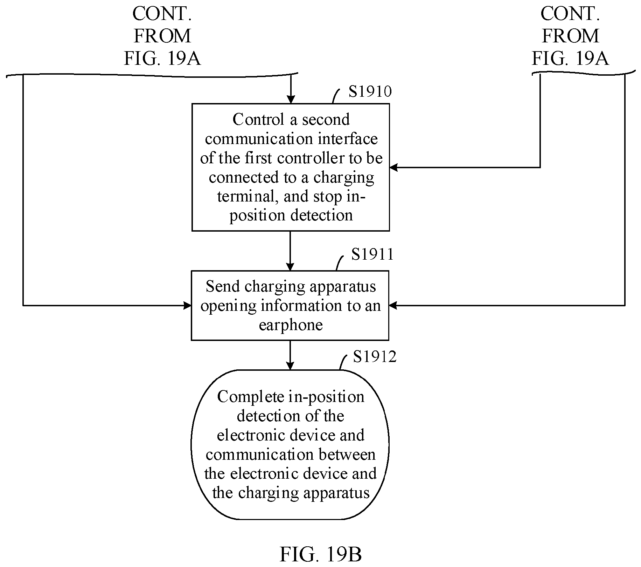

FIG. 19A and FIG. 19B are a flowchart of another communication method according to an embodiment of this application.

The method is applied to a charging apparatus, that is, applied to an earphone charging case, and includes the following steps.

S1901: Open the charging apparatus.

S1902: Notify a first controller that the charging apparatus is opened.

S1903: Determine an output state of a first charging circuit.

The first controller determines a working state of the first charging circuit. When it is determined that a current output state of the first charging circuit is a communication state, that is, when the first charging circuit communicates with an electronic device based on a modulation signal, S1904 is performed. When it is detected that an output of the first charging circuit is currently in a high-impedance state, that is, when the first charging circuit is not connected to the electronic device, S1906 is performed. When it is detected that the current working state of the first charging circuit is a state of charging the electronic device, S1905 is performed.

S1904: Update communication content.

To be specific, in this case, the first charging circuit of the charging apparatus controls, according to a communication protocol predetermined with the electronic device, a first modem circuit to modulate an output voltage of the first charging circuit, to generate a first modulation acknowledgement signal or a second modulation signal, and send the first modulation acknowledgement signal or the second modulation signal to the electronic device.

S1905: Control a second communication interface of the first controller to be connected to a charging terminal.

In this case, the first controller needs to communicate with a second controller of the electronic device.

In a process in which the first controller needs to communicate with the second controller of the electronic device, a second terminal of a first switch module in the first charging circuit is connected to a third terminal of the first switch module, so that the second communication interface of the first controller, namely, a UART interface of the first controller, is connected to the circuit. In this case, an output terminal of a second DC/DC circuit is not connected to the charging terminal. In other words, the charging apparatus temporarily stops charging the electronic device.

In some embodiments, the first controller receives a first charging parameter sent by the second controller, and sends the first charging parameter to a first state machine, so that the first state machine controls the second DC/DC circuit based on the first charging parameter. The first parameter information includes a charging current and a charging voltage of the second battery.

In some other embodiments, the first controller receives voltage information of the second battery sent by the second controller; determines, based on the voltage information of the second battery, a first charging parameter corresponding to the second battery, where the first charging parameter includes a charging voltage and a charging current that correspond to the second battery; and sends the first charging parameter to a first state machine, so that the first state machine controls the second DC/DC circuit based on the first charging parameter.

In the process in which the first controller needs to communicate with the second controller of the electronic device, the first controller may further send a current output parameter of the charging apparatus, for example, an output voltage and an output current, to the second controller.

S1906: Output a preset voltage.

In some embodiments, when the charging apparatus is opened and not connected to the electronic device, the output terminal is in the high-impedance state. In this case, the charging apparatus outputs the preset voltage, or outputs the preset voltage in a preset cycle to reduce power consumption.

Based on the foregoing configuration, after the charging apparatus is opened, the charging apparatus outputs the preset voltage to trigger an earphone to send a handshake signal after the earphone receives an output of the charging apparatus.

S1907: Wait for the electronic device to send the handshake signal.

After the electronic device is put into the charging apparatus, a power receiving terminal is connected to the charging terminal of the charging apparatus. After being in contact with an appropriate input voltage, the electronic device actively sends the handshake signal, namely, a first modulation signal. In this case, a modem current source in the electronic device generates a current pulse signal to form a feature character string.

The first modem circuit of the charging apparatus demodulates the obtained modulation signal, and sends a demodulation result to the first state machine. The first state machine determines whether the first feature character string is a first preset feature character string. If the first feature character string is the first preset feature character string, it represents that a character string that meets the communication protocol is received in this case, and it is determined that the electronic device is connected in this case. Then, S1909 is performed.

When the first state machine determines that the first feature character string is not the first preset feature character string, or the first modem circuit fails to demodulate the first modulation signal, it is determined that a result of identity authentication is that the electronic device does not match the charging apparatus. In this case, the first state machine controls the first modem circuit not to modulate the output voltage of the first charging circuit, that is, does not send the first modulation acknowledgement signal.

If the second battery is overdischarged before the electronic device is charged, trickle charging needs to be first performed on the second battery for a period of time, to protect the second battery.

In this case, a second state machine of the electronic device controls a second modem circuit to modulate an input current of the second charging circuit, so that a modulated current includes a preset pulse signal, and send the preset pulse signal to the charging apparatus. For the preset pulse signal, refer to FIG. 14. Details are not described herein again.

The first modem circuit of the charging apparatus demodulates the received modulation signal, and send a demodulation result to the first state machine. When determining that the electronic device sends the preset pulse signal to the charging apparatus, the first state machine determines that the electronic device is normally connected to the charging apparatus, where the preset pulse signal is a trickle charging handshake signal. In this case, S1908 is performed.

S1908: Maintain an output, report an interrupt, and refresh an earphone in-position register.

When determining that the electronic device sends the preset pulse signal to the charging apparatus, the first state machine maintains a current working state of the second DC/DC circuit, and sends a fifth interrupt signal to the first controller, where the fifth interrupt signal indicates to the first controller that the electronic device is currently in a trickle charging state.

In some embodiments, the earphone in-position register is integrated with the first controller. The earphone in-position register may indicate, to the first controller based on an earphone in-position identifier, whether the earphone is currently in position. For example, if that the earphone in-position identifier is 1 indicates that the earphone is in position, and that the earphone in-position identifier is 0 indicates that the earphone is not in position, in this case, the earphone in-position identifier is refreshed to be set to 1. Alternatively, if that the earphone in-position identifier is 0 indicates that the earphone is in-position, and that the earphone in-position identifier is 1 indicates that the earphone is not in position, in this case, the earphone in-position identifier is refreshed to be set to 0.

S1909: Report an interrupt, set the earphone in-position register, and start to perform in-position detection.

When determining that the electronic device sends a normal handshake signal to the charging apparatus, namely, the first modulation signal or a second modulation acknowledgement signal, the first state machine determines that the earphone is in position. In this case, if that the earphone in-position identifier is 1 indicates that the earphone is in position, and that the earphone in-position identifier is 0 indicates that the earphone is not in position, in this case, the earphone in-position identifier is refreshed to be set to 1. If that the earphone in-position identifier is 0 indicates that the earphone is in-position, and that the earphone in-position identifier is 1 indicates that the earphone is not in position, in this case, the earphone in-position identifier is refreshed to be set to 0.

S1910: Control the second communication interface of the first controller to be connected to the charging terminal, and stop in-position detection.

In other words, the UART interface of the first controller is connected to the circuit, and the first controller prepares to communicate with the second controller of the electronic device.

S1911: Send charging apparatus opening information to the earphone.

S1912: Complete in-position detection of the electronic device and communication between the earphone and the charging apparatus.

The following specifically describes how an earphone implements a method for detecting an in state.

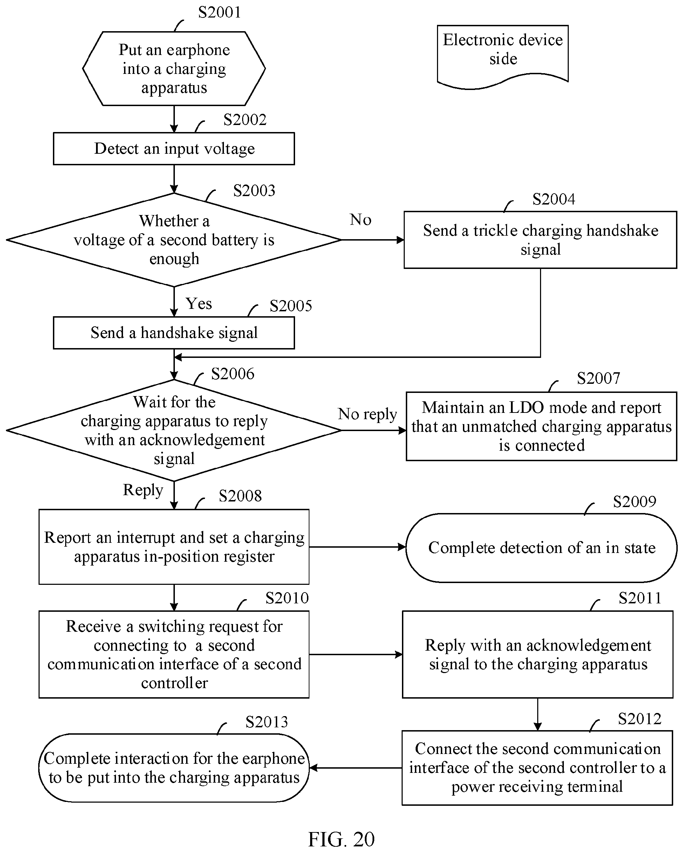

FIG. 20 is a flowchart of another communication method according to an embodiment of this application.

The method is applied to an electronic device, that is, applied to an earphone, and includes the following steps.

S2001: Put the earphone into a charging apparatus.

S2002: Detect an input voltage.

The charging apparatus is configured to automatically output a preset voltage after the charging apparatus is opened. Therefore, after the earphone is put into the charging apparatus, a second charging circuit may be connected to the input voltage.

S2003: Determine whether a voltage of a second battery is enough.

A second controller of the electronic device determines whether the voltage of the second battery is enough. If the voltage of the second battery is enough, it indicates that direct charging or voltage doubling charging can be performed on the second battery, and in this case, S2005 is performed. Alternatively, if the voltage of the second battery is not enough, it indicates that the second battery is overdischarged before being put into the charging apparatus, trickle charging first needs to be performed on the second battery for a period of time, to protect the second battery, and in this case, S2004 is performed.

S2004: Send a trickle charging handshake signal.

For the trickle charging handshake signal, namely, a preset pulse signal, refer to the implementations shown in FIG. 14.

S2005: Send a handshake signal.

The handshake signal is also referred to as a first modulation signal.

In some embodiments, the electronic device may alternatively respond to a second modulation signal sent by the charging apparatus, that is, send a second modulation acknowledgement signal to the charging apparatus.

S2006: Wait for the charging apparatus to reply with an acknowledgement signal.

If there is no reply, it indicates that a first state machine of the charging apparatus determines that a first feature character string in a demodulation result is inconsistent with a first preset feature character string in a predetermined communication protocol, that is, the electronic device does not match the charging apparatus, and S2007 is performed.

If there is a reply, it indicates that identity authentication of the electronic device succeeds. In this case, the received acknowledgement signal sent by the charging apparatus is related to the predetermined protocol. This is not specifically limited in this application. Then, S2006 is performed.

S2007: Maintain an LDO mode, and report that an unmatched charging apparatus is connected.

Because the electronic device does not match the charging apparatus, the LDO mode is maintained, to avoid damage to the second battery due to an excessively high input voltage of the second battery. A second state machine of the electronic device then notifies the second controller that the unmatched charging apparatus is currently connected.

S2008: Report an interrupt, and set a charging apparatus in-position register.

After receiving the acknowledgement signal of the charging apparatus, the first state machine determines that a matched charging apparatus is currently connected, and sends a third interrupt signal to a first controller of the electronic device, where the third interrupt signal indicates that the electronic device is currently connected to the charging apparatus.

In some embodiments, the charging apparatus in-position register is integrated with the second controller. The charging apparatus in-position register may indicate, to the second controller based on a charging apparatus in-position identifier, whether the charging apparatus is currently in position. For example, if that the charging apparatus in-position identifier is 1 indicates that the charging apparatus is in position, and that the charging apparatus in-position identifier is 0 indicates that the charging apparatus is not in position, in this case, the charging apparatus in-position identifier is refreshed to be set to 1. Alternatively, if that the charging apparatus in-position identifier is 0 indicates that the charging apparatus is in-position, and that the charging apparatus in-position identifier is 1 indicates that the charging apparatus is not in position, in this case, the charging apparatus in-position identifier is refreshed to be set to 0.

S2009: Complete the detection of the in state.

S2010: Receive a request for connecting to a second communication interface of the second controller.

In other words, in this case, the first controller of the charging apparatus initiates active communication with the second controller.

S2011: Reply with an acknowledgement signal to the charging apparatus.

The acknowledgement signal represents that the electronic device allows the second communication interface of the second controller to be connected, and the first controller may prepare to perform communication.

S2012: Connect the second communication interface of the second controller to a power receiving terminal.

S2013: Complete interaction for the earphone to be put into the charging apparatus.

After the second communication interface of the second controller is connected, the first controller communicates with the second controller.

The following describes how a charging case implements a method for detecting an out state of an earphone.

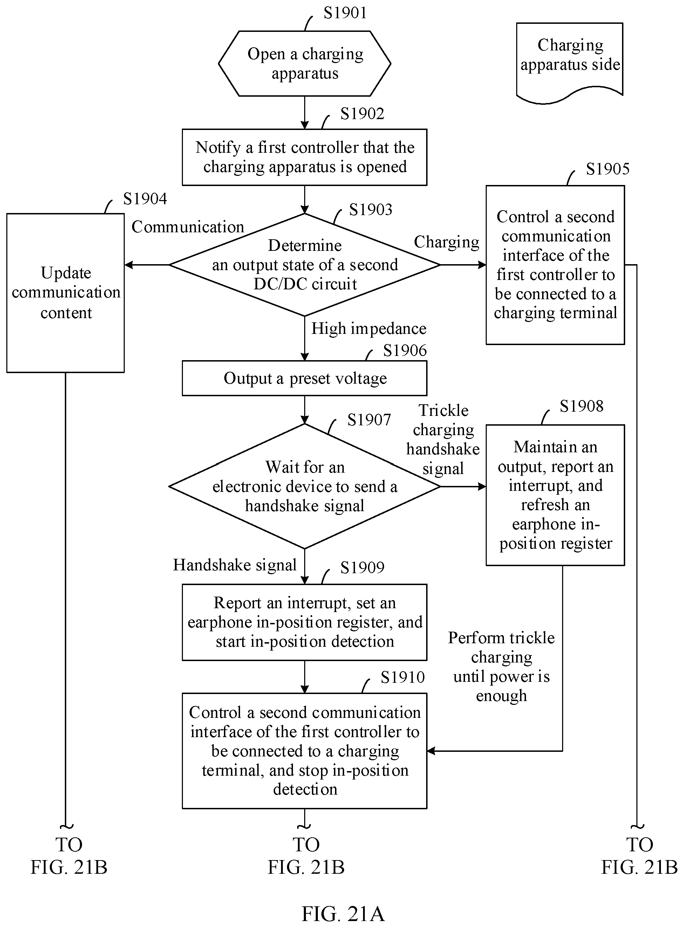

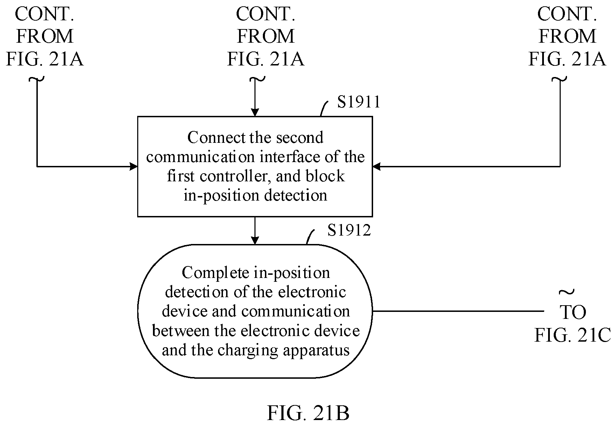

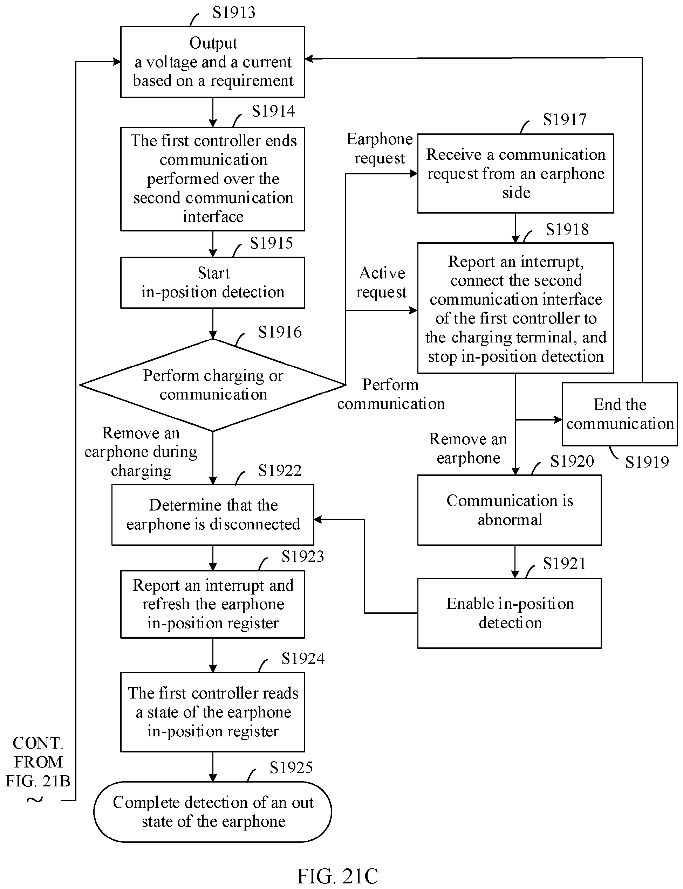

FIG. 21A to FIG. 21C are a flowchart of another communication method according to an embodiment of this application.

After in-position detection of the electronic device and communication between the earphone and the charging apparatus are completed, that is, S1912 is completed, the method further includes the following steps.

S1913: Output a voltage and a current based on a requirement.

The first controller determines, by exchanging information with the second controller, the first charging parameter corresponding to the second battery, namely, the charging current and the charging voltage of the second battery. The first controller sends the first charging parameter to the first state machine, so that the first state machine controls the second DC/DC circuit based on the first charging parameter.

A control loop is disposed in the first charging circuit, the control loop includes a voltage loop and a current loop, and an input of the control loop includes a detected output current of the charging terminal and a detected output voltage of the charging terminal.

The detected output voltage of the charging terminal is compared with the charging voltage in the first charging parameter, and an output voltage of the charging terminal is controlled to be consistent with the charging voltage based on a voltage comparison result, so as to implement closed-loop control of the voltage loop. The detected output current of the charging terminal is compared with the charging current in the first charging parameter, and an output current is controlled to be consistent with the charging current based on a current comparison result, so as to implement closed-loop control of the current loop. In this way, a voltage and a current can be output based on a charging requirement of the second battery.

S1914: The first controller ends communication performed over the second communication interface.

S1915: Enable in-position detection.

S1916: Perform charging or communication.

When communication is performed, specifically, if communication is performed in response to a request of the earphone, S1917 is performed; or specifically, if communication is performed based on an active request, S1918 is performed.

When charging is performed, S1922 continues to be performed.

S1917: Receive a communication request from an earphone side.

In other words, the second controller of the earphone actively initiates the communication request to the first controller.

S1918: Report an interrupt, connect the second communication interface of the first controller to the charging terminal, and stop in-position detection.

In some embodiments, the communication request on the earphone side in S1917 may be carried in the first modulation signal sent by the earphone. After demodulating the first modulation signal, the first modem circuit of the first charging circuit sends a demodulation result to the first state machine. The first state machine determines, based on the demodulation result, that the second controller needs to communicate with the first controller, and then the first state machine reports the interrupt to the first controller, so that the second communication interface of the first controller, namely, the UART interface of the first controller, is connected to the circuit and communicates with the second controller.

S1919: End communication.

S1920: The communication is abnormal.

Because the earphone is removed, the connection between the charging terminal and the power receiving terminal is interrupted, which causes communication interruption.

S1921: Enable in-position detection.

S1922: Determine, through in-position detection, that the earphone is disconnected.

A first comparator may be disposed in the charging apparatus. The first comparator is configured to: compare the output current of the charging apparatus with a preset current, and send an obtained first comparison result to the first state machine.

When determining, based on the first comparison result, that the output current of the charging apparatus is less than the preset current, the first state machine determines that the earphone is disconnected.

S1923: Report an interrupt, and refresh the earphone in-position register.

The first state machine sends a second interrupt signal to the first controller, where the second interrupt signal indicates to the first controller that the electronic device is disconnected from the charging apparatus.

The earphone in-position register is refreshed. For the earphone in-position register, if that the earphone in-position identifier is 1 indicates that the earphone is in position, and that the earphone in-position identifier is 0 indicates that the earphone is not in position, in this case, the earphone in-position identifier is refreshed to be set to 0. Alternatively, if that the earphone in-position identifier is 0 indicates that the earphone is in-position, and that the earphone in-position identifier is 1 indicates that the earphone is not in position, in this case, the earphone in-position identifier is refreshed to be set to 1.

S1924: The first controller reads a state of the earphone in-position register.

In other words, the first controller reads the earphone in-position identifier of the earphone in-position register, and determines that the earphone is currently not in position.

S1925: Complete detection of an out state of the earphone.

In some embodiments, when the earphone is still connected to the charging case after the earphone is fully charged or trickle charging is performed on the earphone, the output current of the charging apparatus is small. To prevent the charging case from mistakenly determining that the earphone is out of the charging case, the earphone is configured to send a preset pulse signal to the charging apparatus. In this case, the method further includes the following steps.

When determining that the electronic device sends a preset pulse signal to the charging apparatus, the first state machine maintains a current working state of the second DC/DC circuit, and sends the fifth interrupt signal to the first controller, where the fifth interrupt signal indicates that the electronic device is currently in the fully-charged state or the trickle charging state.

The following describes how an earphone implements a method for detecting an out state.

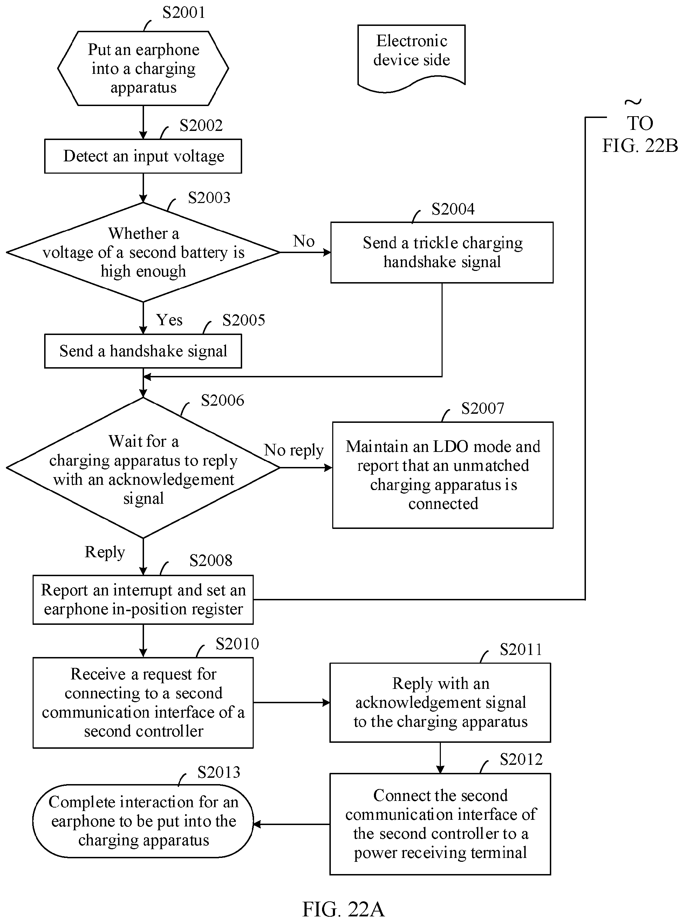

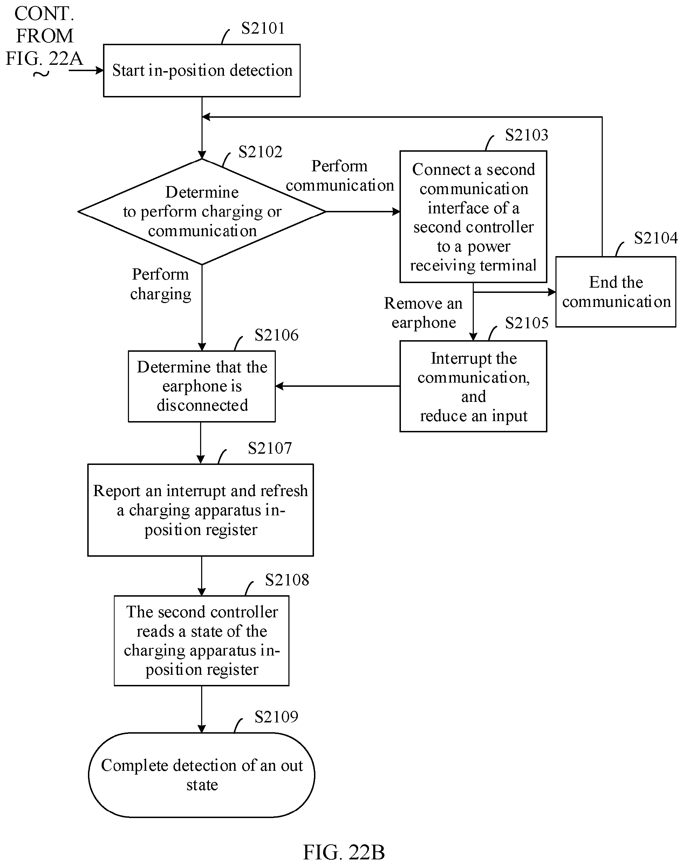

FIG. 22A and FIG. 22B are a flowchart of another communication method according to an embodiment of this application.

The method further includes the following steps after the earphone implements reporting to a terminal and setting the earphone in-position register, that is, after S2008 is implemented.

S2101: Start to perform in-position detection.

S2102: Determine to perform charging or communication.

When it is determined to perform communication, S2103 is performed.

When it is determined to perform charging, S2106 is performed.

S2103: Connect the second communication interface of the second controller to the power receiving terminal.

In other words, a UART interface of the second controller is connected to the circuit.

S2104: End communication.

S2105: Interrupt the communication, and reduce an input.

When the earphone is removed from the charging case, the charging terminal is disconnected from the power receiving terminal. In this case, the communication is interrupted, and an input voltage of the second charging circuit of the earphone is reduced to zero.

S2106: Determine that the earphone is disconnected.

A second comparator is included at an earphone side. The second comparator is configured to compare an input voltage of the electronic device with a preset voltage, and send an obtained second comparison result to the second state machine.

When determining, based on the second comparison result, that the input voltage is less than the preset voltage, the second comparator determines that the electronic device is disconnected from the charging apparatus.

S2107: Report an interrupt, and refresh the earphone in-position register.

When determining, based on the second comparison result, that the input voltage is less than the preset voltage, the second comparator sends a fourth interrupt signal to the second controller, where the fourth interrupt signal indicates to the second controller that the electronic device is disconnected from the charging apparatus.

The charging apparatus in-position register is refreshed. For the charging apparatus in-position register, if that the charging apparatus in-position identifier is 1 indicates that the charging apparatus is in position, and that the charging apparatus in-position identifier is 0 indicates that the charging apparatus is not in position, in this case, the charging apparatus in-position identifier is refreshed to be set to 0. Alternatively, if that the charging apparatus in-position identifier is 0 indicates that the charging apparatus is in-position, and that the charging apparatus in-position identifier is 1 indicates that the charging apparatus is not in position, in this case, the charging apparatus in-position identifier is refreshed to be set to 1.

S2108: The second controller reads a state of the earphone in-position register.

The second controller reads an in-position identifier in the charging apparatus in-position register, to determine that the charging apparatus is currently not in position.

S2109: Complete the detection of the out state.

In some embodiments, the input voltage of the electronic device is zero because the charging apparatus is suddenly powered off due to an over current, an overtemperature, or another reason. Therefore, the electronic device may mistakenly determine that the electronic device is out of the charging apparatus. Therefore, the method further includes the following steps.

When determining, based on the second comparison result, that the input voltage is less than the preset voltage, the second state machine controls the second modem circuit to send a current detection signal to the power receiving terminal, and sends a fourth interrupt signal to the second controller when a voltage of the power receiving terminal exceeds a preset threshold voltage in preset time, where the fourth interrupt signal indicates to the second controller that the electronic device is disconnected from the charging apparatus. Otherwise, in some other embodiments, the second state machine may send a sixth interrupt signal to the second controller, where the sixth interrupt signal indicates to the second controller that the electronic device is currently disconnected from the charging apparatus.

It may be understood that division into the foregoing steps in embodiments of this application is merely for ease of description, and does not constitute a limitation on the technical solutions of this application. In actual application, a person skilled in the art may perform technical adjustment and simplification on the foregoing methods, and an obtained implementation still falls within the protection scope of this application.

In conclusion, according to the communication method provided in embodiments of this application, bidirectional communication between the charging apparatus and the electronic device can be implemented when the charging apparatus supports direct charging or voltage doubling charging on the electronic device. The bidirectional communication may be used to implement bidirectional in-position identification and identity authentication. In addition, the charging apparatus is prevented from mistakenly determining that the charging apparatus is disconnected from the electronic device, and the electronic device is prevented from mistakenly determining that the electronic device is disconnected from the charging apparatus. This improves reliability and accuracy of in-position detection. In addition, the foregoing implementations have high integration, do not need to rely on components such as a Hall sensor and an infrared light sensor, and further reduces hardware costs.

An embodiment of this application further provides a chip, applied to the charging apparatus provided in the foregoing embodiments. The following provides specific descriptions with reference to the accompanying drawings.

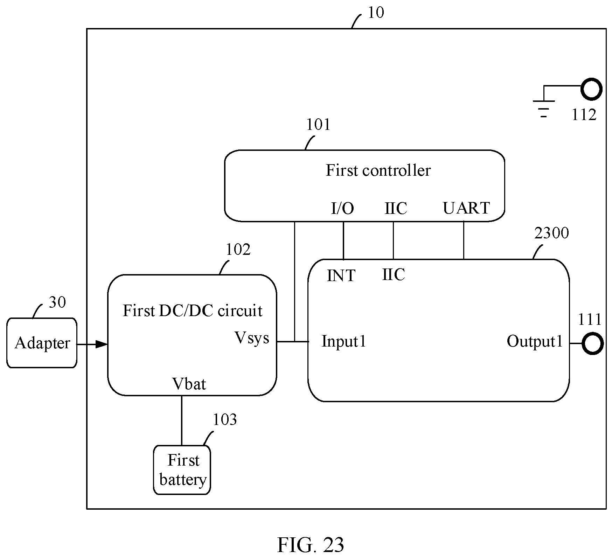

FIG. 23 is a diagram of a chip according to an embodiment of this application.

A first charging circuit is integrated into a chip 2300, and the chip 2300 includes an input port Input1 and an output port Output1.

The input port Input1 is an input terminal of the first charging circuit, and is configured to be connected to the first DC/DC circuit.

The output port Output1 is an output terminal of the first charging circuit, and is configured to be connected to a charging terminal.

Further, the chip 2300 further includes an interface configured to communicate with an I/O interface of a first controller 101, an interface configured to communicate with an IIC interface of the first controller 101, and an interface configured to communicate with a UART interface of the first controller 101.

The first charging circuit is configured to: receive a first modulation signal sent by an electronic device, demodulate the first modulation signal, and when a demodulation result includes a first current, send a first modulation acknowledgement signal to the electronic device, where the first current is used to identify that the electronic device initiates communication with the charging apparatus; or send a second modulation signal to an electronic device, receive a second modulation acknowledgement signal sent by the electronic device, and demodulate the second modulation acknowledgement signal, where the second modulation signal includes a first voltage, and the first voltage is used to disconnect a second charging circuit of the electronic device from a second battery.

An embodiment of this application further provides another chip, applied to the electronic device provided in the foregoing embodiments. The following provides specific descriptions with reference to the accompanying drawings.

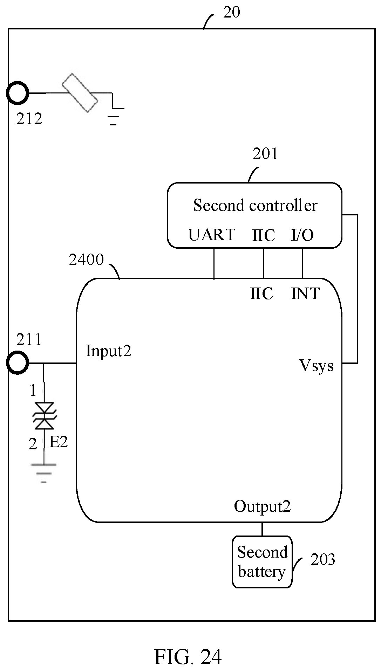

FIG. 24 is a diagram of another chip according to an embodiment of this application.

A second charging circuit is integrated into a chip, and the chip includes an input port Input2 and an output port Output2.

The input port Input2 connects a first terminal of the second charging circuit to a power receiving terminal.

The output port Input2 connects a second terminal of the second charging circuit to a second battery, and is configured to charge the second battery.

The second charging circuit is configured to disconnect the second charging circuit from the second battery, send a first modulation signal to a charging apparatus, receive a first modulation acknowledgement signal sent by the charging apparatus, and demodulate the first modulation acknowledgement signal, where the first modulation signal includes a first current, and the first current is used to identify that the electronic device initiates communication with the charging apparatus; or receive a second modulation signal sent by a charging apparatus, demodulate the second modulation signal, and when a demodulation result includes a first voltage, disconnect the second charging circuit from the second battery, and send a second modulation acknowledgement signal to the charging apparatus.

Further, the chip 2400 further includes an interface configured to communicate with an I/O interface of a second controller 201, an interface configured to communicate with an IIC interface of the second controller 201, an interface configured to communicate with a UART interface of the second controller 201, and an interface configured to supply power to the second controller.

The first controller and the second controllers in the foregoing embodiments of this application each may be an application-specific integrated circuit (Application-Specific Integrated Circuit, ASIC), a programmable logic device (Programmable Logic Device, PLD), a digital signal processor (Digital Signal Processor, DSP), or a combination thereof. The PLD may be a complex programmable logic device (Complex Programmable Logic Device, CPLD), a field-programmable logic gate array (Field-programmable Logic Gate Array, FPGA), generic array logic (Generic Array Logic, GAL), or any combination thereof. This is not specifically limited in this embodiment of this application.

It should be understood that in this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

Embodiments in this specification are all described in a progressive manner, for same or similar parts in embodiments, refer to these embodiments, and each embodiment focuses on a difference from other embodiments. The apparatus embodiments described above are only examples. The units and modules described as separate components may or may not be physically separated. In addition, some or all units and modules may be selected based on actual requirements, to achieve the objectives of the solutions of embodiments. A person of ordinary skill in the art may understand and implement embodiments of the present invention without creative efforts.

The foregoing descriptions are merely specific implementations of this application. It should be noted that a person of ordinary skill in the art may make some improvements and modifications without departing from a principle of this application, and these improvements and modifications shall also be considered as within the protection scope of this application.

## Claims

1. A chip (2300), wherein a first charging circuit (104) is integrated into the chip (2300), and the chip (2300) comprises an input port (Input1) and an output port (Output1), wherein
the input port (Input1) is an input terminal of the first charging circuit (104), and is configured to be connected to an output terminal of a first DC/DC circuit of a charging apparatus (10);
the output port (Output1) is an output terminal of the first charging circuit (104), and is configured to be connected to a charging terminal; and
the first charging circuit (104) is configured to: send a second modulation signal to an electronic device (20), and receive a second modulation acknowledgement signal sent by the electronic device (20), **characterised in that** the second modulation signal carries a first voltage, and the first voltage is used to trigger disconnection of a second charging circuit (202) of the electronic device (20) from a second battery (203).

2. The chip (2300) according to claim 1, wherein the second modulation acknowledgement signal is current modulation signal, and the second modulation signal is a voltage modulation signal.

3. The chip (2300) according to claim 1 or 2, the first voltage is less than a first trigger voltage of a first protection circuit of the electronic device.

4. The chip (2300) according to claim 1 or 2, the first voltage is equal to zero.

5. The chip (2300) according to claim 1 or 2, the first voltage is greater than or equal to a second trigger voltage of a second protection circuit of the electronic device.

6. The chip (2300) according to anyone of claims 1- 5, the first charging circuit (104) is further configured to receive a first modulation signal sent by the electronic device (20), and send a first modulation acknowledgement signal to the electronic device (20), wherein the first modulation signal carries a first current and the first current is used to identify that the electronic device (20) initiates communication with the charging apparatus (10).

7. The chip (2300) according to claim 6, wherein the first modulation acknowledgement signal is voltage modulation signal.

8. A chip (2400), wherein a second charging circuit (202) is integrated into the chip (2400), and the chip (2400) comprises an input port (Input2) and an output port (Output2), wherein
the input port (Input2) is a first terminal of the second charging circuit (202), and is configured to be connected to a power receiving terminal;
the output port (Output2) is a second terminal of the second charging circuit (202), and is configured to be connected to a second battery of an electronic device; and
the second charging circuit (202) is configured to: receive a second modulation signal sent by a charging apparatus (10), demodulate the second modulation signal, **characterised in that**,
the second charging circuit (202) is further configured to disconnect, in response to a demodulation result of the second modulation signal comprises a first voltage , from the second battery (203), and send a second modulation acknowledgement signal to the charging apparatus (10).

9. The chip (2400) according to claim 8, wherein the second modulation acknowledgement signal is current modulation signal, and the second modulation signal is voltage modulation signal.

10. The chip (2400) according to claim 8 or 9, the first voltage is less than a first trigger voltage of a first protection circuit of the electronic device.

11. The chip (2400) according to claim 8 or 9, the first voltage is equal to zero.

12. The chip (2400) according to claim 8 or 9, the first voltage is greater than or equal to a second trigger voltage of a second protection circuit of the electronic device.

13. The chip (2400) according to anyone of claims 8-12, the second charging circuit (202) is further configured to:
disconnect from the second battery (203), send a first modulation signal to the charging apparatus (10), receive a first modulation acknowledgement signal sent by the charging apparatus (10), and demodulate the first modulation acknowledgement signal, wherein the second modulation signal comprises a first current, and the first current is used to identify that the electronic device (20) initiates communication with the charging apparatus (10).

14. The chip (2400) according to claim 13, wherein the first modulation signal is current modulation signal, and the first modulation acknowledgement signal is voltage modulation signal.

15. A charging apparatus(10), wherein the charging apparatus (10) comprises a first controller (101) and a chip (2300) according to anyone of claims 1-7, wherein the first controller is connected to the chip (2300).

16. An electronic device (20), wherein the electronic device (20) comprises a second controller (201) and a chip (2400) according to anyone of claims 8-14, wherein the second controller is connected to the chip (2400).

17. A communication method, applied to a charging apparatus (10), the communication method comprises:
sending a second modulation signal to an electronic device (20); and
receiving a second modulation acknowledgement signal sent by the electronic device (20);
**characterized in that** the second modulation signal comprises a first voltage, and the first voltage is used to trigger disconnection of a second charging circuit of the electronic device from a second battery.

18. A communication method, applied to an electronic device (20); and
the communication method comprises:
receiving a second modulation signal sent by a charging apparatus (10);
demodulating the second modulation signal;
disconnecting, in response to a first demodulation result of the second modulation signal comprises a first voltage, a second charging circuit of the electronic device from a second battery (203), and sending a second modulation acknowledgement signal to the charging apparatus (10).
